# EUROPEAN PATENT SPECIFICATION

(11) **EP 4 467 360 B1**
(45) Date of publication and mention of the grant of the patent: **17.09.2025**
(21) Application number: 24168877.9
(22) Date of filing: 08.04.2024
(51) Int. Cl.: B60C 11/03, B60C 11/12, B60C 11/13

(54) **HEAVY DUTY TIRE**
SCHWERLASTREIFEN
PNEU POUR POIDS LOURDS

(30) Priority: 26.05.2023 JP 2023087074
(43) Date of publication of application: 27.11.2024
(73) Proprietor: Sumitomo Rubber Industries, Ltd., Kobe-shi, Hyogo 651-0072 (JP); Sumitomo Rubber Industries, Ltd., Kobe-shi, Hyogo-ken 651-0072 (JP)
(72) Inventor: ARIYASU, SATOSHI, Kobe-shi, 651-0072 (JP)
(74) Representative: Manitz Finsterwald Patent- und Rechtsanwaltspartnerschaft mbB

(56) References cited:
- EP-A1- 4 119 358
- CA-A1- 3 011 312
- FR-A1- 3 017 075
- JP-A- 2019 510 681
- JP-A- 2022 057 195
- US-A1- 2011 048 603

## Description

### BACKGROUND OF THE INVENTION

### Field of the Invention

The present invention relates to a heavy duty tire.

### Background Art

A tire comes into contact with a road surface at a tread thereof. A tread pattern formed by forming grooves on the tread influences the performance of the tire.

A plurality of circumferential main grooves are formed on the tread of the tire so as to be aligned in the axial direction. The plurality of circumferential main grooves divide the tread into a plurality of land portions. By forming lateral grooves on the land portions such that the lateral grooves traverse the land portions, the stiffness of the land portions is controlled. A heavy duty tire that is designed such that running performance on a wet road surface (hereinafter referred to as wet performance) is improved by adjusting the shapes of middle lateral grooves formed on middle land portions, has been known (for example JP 2016-210226 A).

CA 3 011 312 A1 discloses a heavy duty tire according to the preamble of claim 1.

In consideration of influence on the environment, reduction of the rolling resistance of tires is required.

An object of the present invention to provide a heavy duty tire that can suppress a decrease in wet performance due to wear while reducing rolling resistance.

### SUMMARY OF THE INVENTION

This object is achieved with a heavy duty tire having the features of claim 1. Subclaims are directed to preferable embodiments.

A heavy duty tire according to the present invention includes a tread having a tread surface configured to come into contact with a road surface. The tread has a plurality of circumferential main grooves aligned in an axial direction and extending continuously in a circumferential direction. The plurality of circumferential main grooves include a crown circumferential main groove located on an equator plane and a pair of shoulder circumferential main grooves each located on an outermost side in the axial direction. The plurality of circumferential main grooves divide the tread into a plurality of land portions. The plurality of land portions include a pair of crown land portions closest to the equator plane and a pair of shoulder land portions each located axially outward of the shoulder circumferential main groove and including an end of the tread surface. Each of the crown land portions has a crown narrow groove extending continuously in the circumferential direction. The crown narrow groove divides the crown land portion into two crown narrow land portions. Each of the crown narrow land portions has a plurality of crown sipes traversing the crown narrow land portion and shallower than the crown circumferential main groove. The crown narrow groove is deeper than the crown sipes. Each crown narrow groove includes a body portion main body and an enlarged width portion located radially inward of the body portion main body and having a groove width larger than a groove width of the body portion main body. Each of the shoulder circumferential main grooves has an inner wall surface closer to the equator plane, an outer wall surface closer to the end of the tread surface, and a bottom surface extending between the inner wall surface and the outer wall surface and including a groove bottom. A locus of the groove bottom in each of the shoulder circumferential main grooves includes inner peaks closer to the equator plane and outer peaks closer to the end of the tread surface, and extends in a zigzag manner while passing through the inner peaks and the outer peaks alternately in the circumferential direction. Each crown narrow groove includes inner longitudinal grooves closer to the equator plane, outer longitudinal grooves closer to the end of the tread surface, and connection grooves connecting the inner longitudinal grooves and the outer longitudinal grooves. The inner longitudinal grooves and the outer longitudinal grooves are arranged alternately in the circumferential direction.

The present invention can provide a heavy duty tire that can suppress a decrease in wet performance due to wear while reducing rolling resistance.

### BRIEF DESCRIPTION OF THE DRAWINGS

FIG. 1 is a development view showing a part of a tread of a heavy duty tire according to one embodiment of the present invention;
FIG. 2 is a cross-sectional view of FIG. 1 taken along a line II-II;
FIG. 3 is an enlarged development view showing a part of FIG. 1;
FIG. 4 is a cross-sectional view of FIG. 3 taken along a line IV-IV;
FIG. 5 is a cross-sectional view of FIG. 3 taken along a line V-V;
FIG. 6 is a cross-sectional view of FIG. 3 taken along a line VI-VI;
FIG. 7 is a cross-sectional view of FIG. 3 taken along a line VII-VII;
FIG. 8 is an enlarged development view showing a part of FIG. 1;
FIG. 9 is a cross-sectional view of FIG. 8 taken along a line IX-IX;
FIG. 10 is a cross-sectional view of FIG. 8 taken along a line X-X;
FIG. 11 illustrates a change in the groove width of a shoulder circumferential main groove at an inner peak of a groove bottom due to wear; and
FIG. 12 illustrates a change in the groove width of the shoulder circumferential main groove at an outer peak of the groove bottom due to wear.

### DETAILED DESCRIPTION

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

A center portion of the tread portion is also referred to as crown portion. A portion of the tread portion at an end thereof is also referred to as shoulder portion.

### [Findings on Which Present Invention Is Based]

If a tread pattern that places importance on running performance such as wet performance is adopted for the tread of a tire, the stiffness of the tread tends to decrease. With the tread pattern that places importance on running performance, energy loss is likely to occur in the tread, so that there is a concern that the rolling resistance of the tire may increase.

If the number of land portions formed in the tread is reduced and the volume per land portion is increased, the stiffness of each land portion can be increased, so that the tire can have reduced rolling resistance. However, the tread becomes worn. Grooves that have functioned as edge components disappear and the groove volume decreases. If a tread pattern that places importance on environmental performance is adopted, it is expected that the rolling resistance of a tire can be reduced, but there is a concern that the wet performance of the tire may be decreased due to wear.

In consideration of influence on the environment, tires are required to have further reduced rolling resistance as environmental performance.

Therefore, in order to establish a technology capable of suppressing a decrease in running performance due to wear even with a tread pattern that places importance on environmental performance, the present inventor has conducted a thorough study for a tread pattern for a tire, and has completed the invention described below.

### [Details of Embodiments of Present Invention]

Hereinafter, the present invention will be described in detail based on preferred embodiments with appropriate reference to the drawings.

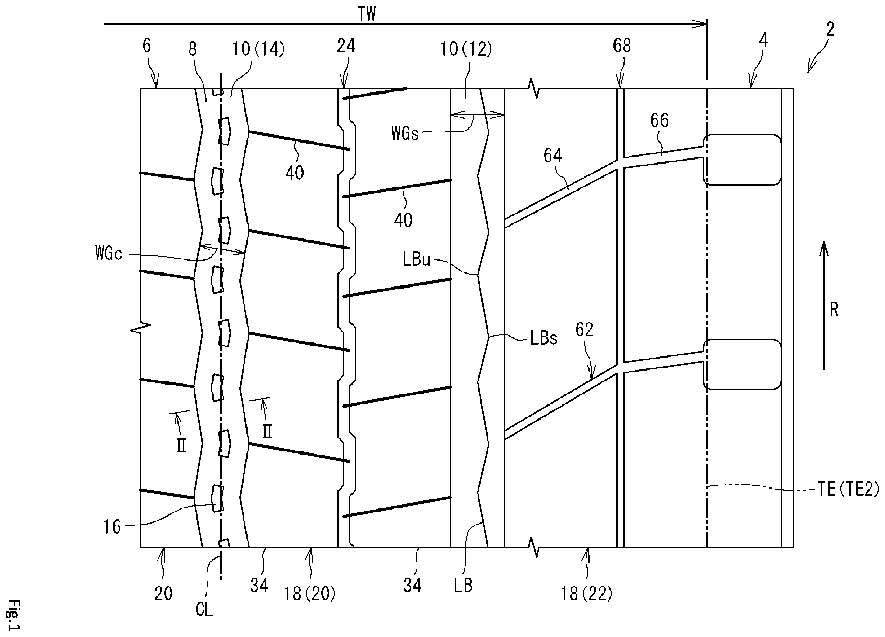

FIG. 1 is a plan view illustrating a development of a part of a tread 4 of a tire 2 according to one embodiment of the present invention. The tire 2 is mounted to a vehicle such as a truck and a bus. The tire 2 is a heavy duty tire.

In FIG. 1, the right-left direction is the axial direction of the tire 2, and the up-down direction is the circumferential direction of the tire 2. The direction perpendicular to the surface of the drawing sheet of FIG. 1 is the radial direction of the tire 2. In FIG. 1, an alternate long and short dash line CL extending in the circumferential direction represents the equator plane of the tire 2.

The upper side of the drawing sheet of FIG. 1 is a first direction side in the circumferential direction of the tire 2, and the lower side of the drawing sheet of FIG. 1 is a second direction side in the circumferential direction of the tire 2.

FIG. 1 shows a tread pattern formed on the tread 4. The tread pattern of the present invention will be described below using the tread pattern shown in FIG. 1 as an example. In the present invention, the internal structure of the tire 2 is not limited to any particular internal structure. Although not described in detail, the tire 2 has a general internal structure as the internal structure of a heavy duty tire.

The tread 4 is located on the radially outer side in the tire 2 and extends in the circumferential direction. The outer circumferential surface of the tread 4 is a tread surface 6. The tire 2 comes into contact with a road surface at the tread surface 6. The tread 4 has the tread surface 6 which comes into contact with a road surface.

The tread 4 is formed from a crosslinked rubber. Grooves 8 are formed on the tread 4. Accordingly, a tread pattern is formed.

The point of intersection of the tread surface 6 and the equator plane CL corresponds to an equator. In the case where the groove 8 is located on the equator plane CL as shown in FIG. 1, the equator is specified on the basis of a virtual outer surface obtained on the assumption that the groove 8 is not provided on the equator plane CL.

An alternate long and two short dashes line indicated by reference character TE represents an end of the tread surface 6.

In the tire, when the end of the tread surface cannot be identified from the appearance, a position, on the outer surface of the tire, corresponding to an axially outer end of a ground-contact surface obtained when a standardized load is applied to the tire in a standardized state and the tire is brought into contact with a flat surface with a camber angle being set to 0°, is used as the end of the tread surface.

In the tread surface 6 shown in FIG. 1, an end TE (not shown) of the tread surface 6 located on the left side of the equator plane CL is also referred to as first end TE1. An end TE of the tread surface 6 located on the right side of the equator plane CL is also referred to as second end TE2.

In FIG. 1, a length indicated by reference character TW is the width of the tread surface 6. The width TW of the tread surface 6 is the distance in the axial direction from the first end TE1 to the second end TE2 of the tread surface 6. The width TW of the tread surface 6 is represented as a length measured along the tread surface 6.

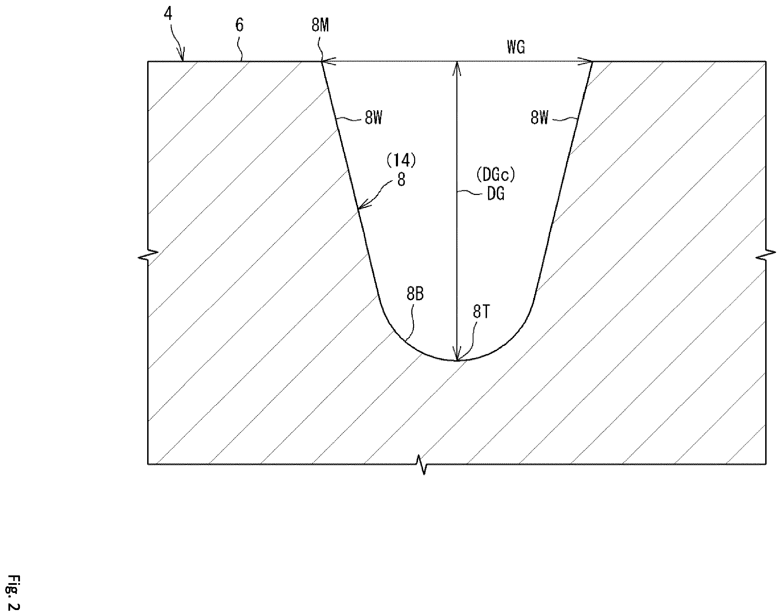

FIG. 2 is a cross-sectional view of FIG. 1 taken along a line II-II. FIG. 2 shows a cross-section of the groove 8, specifically, a center circumferential main groove described later. The main configuration of the groove 8 will be described with reference to FIG. 2.

The groove 8 has a pair of wall surfaces 8W including a groove opening 8M, and a bottom surface 8B including a groove bottom 8T. The groove width of the groove 8 is represented as the distance between a first wall surface 8W and a second wall surface 8W which are the pair of wall surfaces 8W, that is, the inter-wall surface distance.

In FIG. 2, a length indicated by a double-headed arrow WG is the groove width of the groove 8 at the groove opening 8M. The groove width WG is represented as the shortest distance between a pair of edges forming the groove opening 8M. In the case where a portion of the groove 8 at the groove opening 8M is processed in a tapered manner, the groove width at the groove opening 8M of the groove 8 is represented on the basis of virtual edges obtained on the assumption that the portion of the groove 8 at the groove opening 8M is not processed in a tapered manner.

A length indicated by a double-headed arrow DG is the groove depth of the groove 8. The groove depth DG of the groove 8 is represented as the shortest distance from a line segment connecting the left and right edges to the groove bottom 8T of the groove 8.

The position, the groove width WG, and the groove depth DG of the groove 8 are determined as appropriate according to the specifications of the tire 2.

The groove bottom 8T is the deepest position in the cross-section of the groove 8. The distance from the line segment connecting the left and right edges forming the groove opening 8M, to the bottom surface 8B, is measured along a normal line of this line segment. A position at which the distance from the line segment to the bottom surface 8B is the largest is the groove bottom 8T.

The bottom surface 8B shown in FIG. 2 is a curved surface. The bottom surface 8B may include a flat surface, and this flat surface may include the groove bottom 8T. In this case, the width center of the flat surface is used as the groove bottom 8T.

The grooves 8 each having a groove width WG of less than 1.0 mm at the groove opening 8M are also referred to as sipes. The grooves 8 other than sipes are also referred to as ordinary grooves, and each have a groove width WG of not less than 1.0 mm at the groove opening 8M thereof.

A sipe may include a portion (hereinafter referred to as ordinary groove equivalent portion) having a groove width of not less than 1.0 mm, between the groove opening 8M and the groove bottom 8T thereof. In this case, the sipe becomes an ordinary groove when the tread 4 becomes worn and the ordinary groove equivalent portion is exposed.

An ordinary groove may include a portion (hereinafter referred to as sipe equivalent portion) having a groove width of less than 1.0 mm, between the groove opening 8M and the groove bottom 8T thereof. In this case, the ordinary groove becomes a sipe when the tread 4 becomes worn and the sipe equivalent portion is exposed.

An ordinary groove that has a narrow groove width and that allows a pair of wall surfaces to come into contact with each other when the tire comes into contact with a road surface is also referred to as narrow groove. An ordinary groove that has a wide groove width and a pair of wall surfaces that do not come into contact with each other even when the tire comes into contact with a road surface is also referred to as main groove.

As shown in FIG. 1, a plurality of circumferential main grooves 10 are formed on the tread 4 of the tire 2 so as to be aligned in the axial direction. Each circumferential main groove 10 extends continuously in the circumferential direction. The circumferential main groove 10 is the above-described main groove. The tread 4 has the plurality of circumferential main grooves 10 aligned in the axial direction and extending continuously in the circumferential direction.

The groove depth of each circumferential main groove 10 is, for example, not less than 10 mm and not greater than 21 mm. From the viewpoint that the tire 2 can exhibit excellent wet performance, the groove depth is preferably not less than 13 mm and not greater than 18 mm.

The tread 4 shown in FIG. 1 has three circumferential main grooves 10 aligned in the axial direction. Among the three circumferential main grooves 10, the circumferential main groove 10 located on each outermost side in the axial direction is a shoulder circumferential main groove 12. The circumferential main groove 10 located on the equator plane CL is a crown circumferential main groove 14. The plurality of circumferential main grooves 10 formed on the tread 4 include the crown circumferential main groove 14 and a pair of the shoulder circumferential main grooves 12.

In the case where a circumferential main groove is further provided between the crown circumferential main groove 14 and each shoulder circumferential main groove 12, this circumferential main groove is also referred to as middle circumferential main groove.

In FIG. 1, a length indicated by a double-headed arrow WGc is the groove width at the groove opening of the crown circumferential main groove 14. A length indicated by a double-headed arrow WGs is the groove width at the groove opening of the shoulder circumferential main groove 12.

The ratio (WGc/TW) of the groove width WGc of the crown circumferential main groove 14 to the width TW of the tread surface 6 exceeds 2.0%. Specifically, the ratio (WGc/TW) is preferably not less than 4.0% and not greater than 10%.

As shown in FIG. 1, the groove width WGs of the shoulder circumferential main groove 12 is larger than the groove width WGc of the crown circumferential main groove 14. The ratio (WGs/TW) of the groove width WGs of the shoulder circumferential main groove 12 to the width TW of the tread surface 6 is preferably not less than 5.0% and not greater than 11%.

As shown in FIG. 1, a projection 16 is provided on the bottom surface of the crown circumferential main groove 14 so as to project from the bottom surface. A plurality of projections 16 are arranged so as to be spaced at predetermined intervals in the circumferential direction. The projections 16 prevent stones from being trapped in the crown circumferential main groove 14.

As described above, the tread 4 has the plurality of circumferential main grooves 10. The plurality of circumferential main grooves 10 divide the tread 4 into a plurality of land portions 18.

In the tread 4 shown in FIG. 1, four land portions 18 are formed by forming the three circumferential main grooves 10 thereon. Among the four land portions 18, the land portions 18 closest to the equator plane CL are crown land portions 20. In other words, the land portions 18 located on both sides of the crown circumferential main groove 14 are crown land portions 20. The land portion 18 located on each outermost side in the axial direction is a shoulder land portion 22. The shoulder land portion 22 is located axially outward of the shoulder circumferential main groove 12 and includes the end TE of the tread surface 6. The plurality of land portions 18 formed in the tread 4 include a pair of the crown land portions 20 and a pair of the shoulder land portions 22.

In the case where a land portion is further provided between each crown land portion 20 and each shoulder land portion 22, this land portion is also referred to as middle land portion.

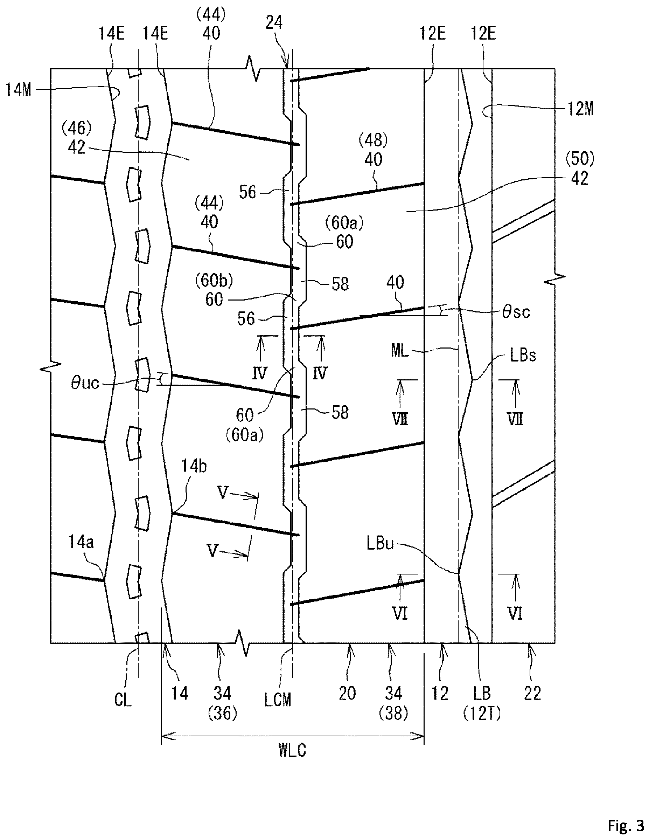

FIG. 3 shows a part of the tread surface 6 shown in FIG. 1. FIG. 3 shows the crown land portion 20.

Each of the two crown land portions 20 provided in the tread 4 of the tire 2 has a crown narrow groove 24 extending continuously in the circumferential direction. The crown narrow groove 24 is the above-described narrow groove.

In FIG. 3, a length indicated by a double-headed arrow WLC is the maximum width of the crown land portion 20. In the crown land portion 20 of the tire 2, the ratio (WLC/TW) of the maximum width WLC to the width TW of the tread surface 6 is not less than 17% and not greater than 27%.

In FIG. 3, an alternate long and short dash line LCM is a maximum width center line of the crown land portion 20. The crown narrow groove 24 is located on the maximum width center line LCM. In other words, the crown narrow groove 24 is located so as to overlap the maximum width center line LCM in the radial direction.

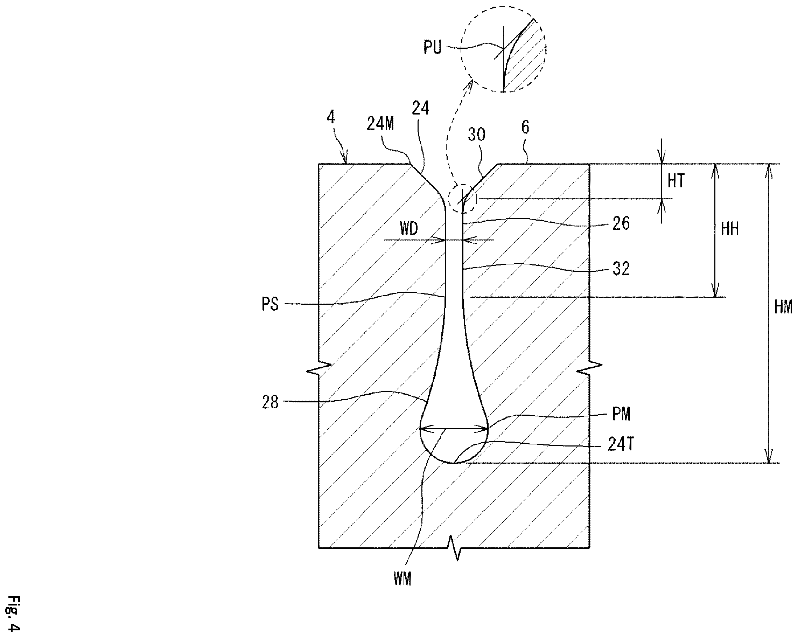

FIG. 4 is a cross-sectional view of the crown narrow groove 24 taken along a line IV-IV in FIG. 3. FIG. 4 shows a cross-section of the crown narrow groove 24 along a plane perpendicular to the length direction of the crown narrow groove 24.

The crown narrow groove 24 includes a body portion 26 and an enlarged width portion 28. The body portion 26 of the crown narrow groove 24 shown in FIG. 4 includes a tapered portion 30 and a body portion main body 32.

The tapered portion 30 includes a groove opening 24M of the crown narrow groove 24. The tapered portion 30 is tapered inward from the groove opening 24M. A contour of each wall surface of the tapered portion 30 shown in FIG. 4 is represented by a straight line. This contour may be represented by a curve.

The body portion main body 32 is located radially inward of the tapered portion 30. The body portion main body 32 is connected to the tapered portion 30. The body portion main body 32 extends straight in the depth direction of the crown narrow groove 24. A contour of each wall surface of the body portion main body 32 is represented by a straight line.

In FIG. 4, a position indicated by reference character PU is the boundary between the tapered portion 30 and the body portion main body 32. The boundary PU is represented as the point of intersection of the wall surface contour line of the tapered portion 30 and the wall surface contour line of the body portion main body 32. As shown in FIG. 4, in the case where the boundary portion between the tapered portion 30 and the body portion main body 32 is rounded, the boundary PU is represented as the point of intersection of an extension line of the wall surface contour line of the tapered portion 30 and an extension line of the wall surface contour line of the body portion main body 32.

The tapered portion 30 does not have to be provided in the crown narrow groove 24. In this case, the body portion 26 is composed of only the body portion main body 32.

From the viewpoint that the tire 2 can effectively suppress concentration of strain on the groove opening 24M of the crown narrow groove 24 while ensuring the groove volume of the crown narrow groove 24, it is preferable that the tapered portion 30 is provided in the crown narrow groove 24 as shown in FIG. 4.

In FIG. 4, a length indicated by a double-headed arrow WD is the groove width of the body portion main body 32. A portion of the crown narrow groove 24 at the groove opening 24M is processed in a tapered manner. The groove width at the groove opening 24M of the crown narrow groove 24 is larger than the groove width WD of the body portion main body 32.

The enlarged width portion 28 is located radially inward of the body portion 26, specifically, the body portion main body 32. The enlarged width portion 28 is connected to the body portion main body 32. The enlarged width portion 28 has a groove width larger than the groove width WD of the body portion main body 32. The enlarged width portion 28 includes a groove bottom 24T of the crown narrow groove 24.

In FIG. 4, a position indicated by reference character PS is the boundary between the body portion main body 32 and the enlarged width portion 28. As described above, in the cross-section of the crown narrow groove 24, each wall surface contour line of the body portion main body 32 is a straight line. In the present invention, the position at which a wall surface contour line of the enlarged width portion 28 converges with the wall surface contour line of the body portion main body 32 is the boundary PS between the body portion main body 32 and the enlarged width portion 28. Specifically, the position at which the groove width from the body portion main body 32 to the enlarged width portion 28 is 1.1 times the groove width WD of the body portion main body 32 is represented as the boundary PS between the body portion main body 32 and the enlarged width portion 28.

In FIG. 4, a length indicated by a double-headed arrow WM is the maximum groove width of the enlarged width portion 28. In FIG. 4, a position indicated by reference character PM is the position at which the enlarged width portion 28 has the maximum groove width WM.

The enlarged width portion 28 is tapered outward from a portion where the enlarged width portion 28 has the maximum groove width WM. In the portion from the maximum groove width position PM to the boundary PS, the enlarged width portion 28 is curved so as to be recessed inward from the outer side thereof.

The enlarged width portion 28 is tapered inward from the portion where the enlarged width portion 28 has the maximum groove width WM. In the portion from the maximum groove width position PM to the groove bottom 24T, the enlarged width portion 28 has a rounded contour. In this portion, the enlarged width portion 28 is curved so as to bulge outward from the inner side thereof.

In the enlarged width portion 28, the boundary between the portion curved so as to be recessed inward from the outer side thereof and the portion curved so as to bulge outward from the inner side thereof is located radially outward of the maximum groove width position PM.

In FIG. 4, a length indicated by a double-headed arrow HM is the groove depth of the crown narrow groove 24. A length indicated by a double-headed arrow HH is the groove depth of the body portion 26. A length indicated by a double-headed arrow HT is the groove depth of the tapered portion 30.

From the viewpoint that the tire 2 can effectively suppress concentration of strain on the groove opening 24M of the crown narrow groove 24 while ensuring the groove volume of the crown narrow groove 24, the ratio (HT/HM) of the groove depth HT of the tapered portion 30 to the groove depth HM of the crown narrow groove 24 is preferably not less than 0.12 and not greater than 0.14.

As described above, the crown land portion 20 has the crown narrow groove 24. The crown narrow groove 24 divides the crown land portion 20 into two crown narrow land portions 34. Of the two crown narrow land portions 34, the crown narrow land portion 34 closer to the equator plane CL is an inner crown narrow land portion 36, and the crown narrow land portion 34 closer to the end TE of the tread surface 6 is an outer crown narrow land portion 38.

Each of the two crown narrow land portions 34 has a plurality of crown sipes 40 traversing the crown narrow land portion 34. The plurality of crown sipes 40 divide the crown narrow land portion 34 into a plurality of crown blocks 42.

The crown sipes 40 provided on the inner crown narrow land portion 36 are also referred to as inner crown sipes 44. The crown blocks 42 of the inner crown narrow land portion 36 are also referred to as inner crown blocks 46. The crown sipes 40 provided on the outer crown narrow land portion 38 are also referred to as outer crown sipes 48. The crown blocks 42 of the outer crown narrow land portion 38 are also referred to as outer crown blocks 50.

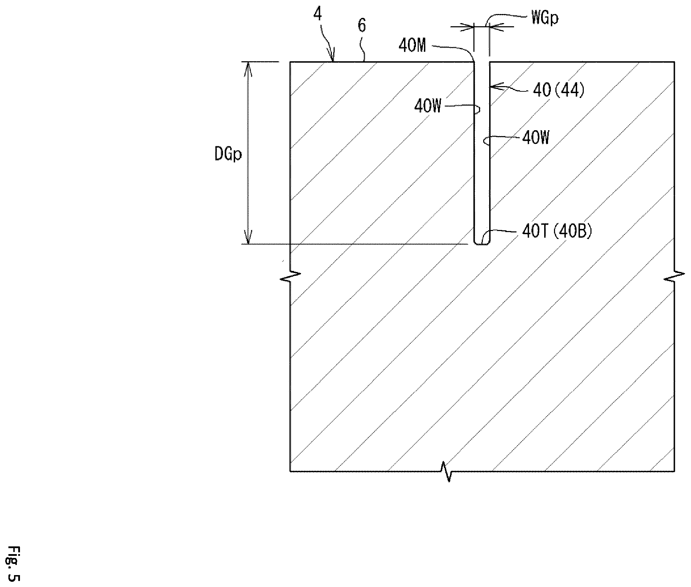

FIG. 5 is a cross-sectional view of the crown sipe 40, specifically, the inner crown sipe 44, taken along a line V-V in FIG. 3. FIG. 5 shows a cross-section of the inner crown sipe 44 along a plane perpendicular to the length direction of the inner crown sipe 44. The cross-sectional shape of each outer crown sipe 48 is the same as that of each inner crown sipe 44. The cross-sectional shape of each crown sipe 40 will be described using the inner crown sipe 44 as an example.

The crown sipe 40 extends straight in the depth direction thereof. The crown sipe 40 has a pair of wall surfaces 40W including a groove opening 40M, and a bottom surface 40B including a groove bottom 40T.

In FIG. 5, a double-headed arrow WGp indicates the groove width at the groove opening 40M of the crown sipe 40. A double-headed arrow DGp indicates the groove depth of the crown sipe 40.

The groove width WGp of each crown sipe 40 of the tire 2 is less than 1.0 mm. When a load acts on the crown narrow land portion 34 and the crown narrow land portion 34 is deformed, the wall surfaces 40W of the crown sipe 40 come into contact with and support each other.

In the tread 4 of the tire 2, each shoulder circumferential main groove 12 is located between the crown land portion 20 and the shoulder land portion 22.

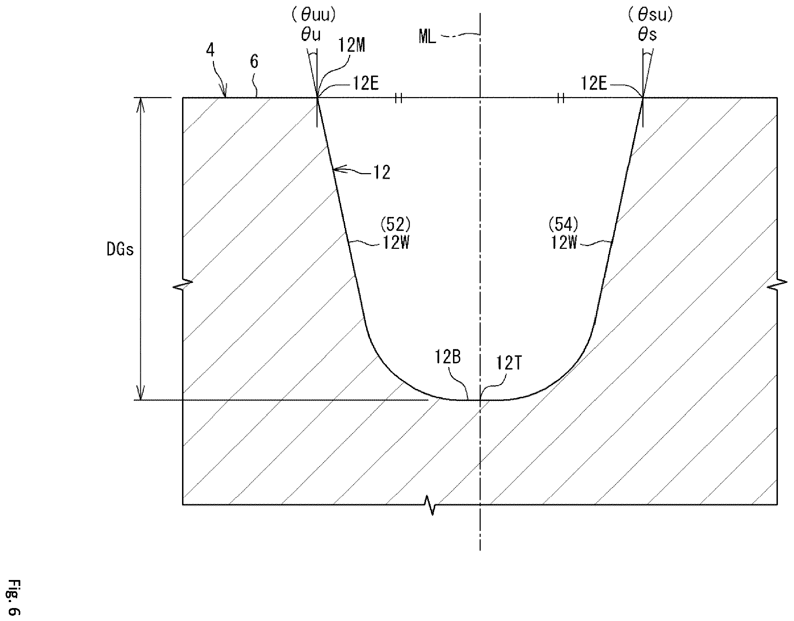

FIG. 6 is a cross-sectional view of FIG. 3 taken along a line VI-VI. FIG. 6 shows a cross-section of the shoulder circumferential main groove 12 along a plane perpendicular to the length direction of the shoulder circumferential main groove 12. In FIG. 6, an alternate long and short dash line ML is a center line of the groove width at a groove opening 12M of the shoulder circumferential main groove 12.

The shoulder circumferential main groove 12 has a pair of wall surfaces 12W including the groove opening 12M, and a bottom surface 12B including a groove bottom 12T. Of the pair of wall surfaces 12W, the wall surface 12W closer to the equator plane CL is also referred to as inner wall surface 52, and the wall surface 12W closer to the end TE of the tread surface 6 is also referred to as outer wall surface 54. The bottom surface 12B extends between the inner wall surface 52 and the outer wall surface 54.

Each of the inner wall surface 52 and the outer wall surface 54 is inclined with respect to a normal line of the tread surface 6 at the groove opening 12M. In FIG. 6, an angle θu is an angle of the inner wall surface 52 with respect to the normal line of the tread surface 6 at the groove opening 12M. The angle θu is also referred to as inclination angle of the inner wall surface 52. An angle θs is an angle of the outer wall surface 54 with respect to a normal line of the tread surface 6 at the groove opening 12M. The angle θs is also referred to as inclination angle of the outer wall surface 54.

In FIG. 6, a length indicated by a double-headed arrow DGs is the groove depth of the shoulder circumferential main groove 12. In FIG. 2, a length indicated by a double-headed arrow DGc is the groove depth of the crown circumferential main groove 14. The groove depth DGs of the shoulder circumferential main groove 12 is equal to the groove depth DGc of the crown circumferential main groove 14. The shoulder circumferential main groove 12 may be shallower than the crown circumferential main groove 14, or the shoulder circumferential main groove 12 may be deeper than the crown circumferential main groove 14.

As shown in FIG. 3, a pair of edges 12E forming the groove opening 12M of the shoulder circumferential main groove 12 each extend straight in the circumferential direction.

In FIG. 3, a solid line LB is the locus of the groove bottom 12T of the shoulder circumferential main groove 12. As shown in FIG. 3, the locus LB of the groove bottom 12T of the shoulder circumferential main groove 12 extends in a zigzag manner. Specifically, the locus LB includes inner peaks LBu closer to the equator plane CL and outer peaks LBs closer to the end TE of the tread surface 6, and extends in a zigzag manner while passing through the inner peaks LBu and the outer peaks LBs alternately in the circumferential direction.

In FIG. 3, the line VI-VI passes through the inner peak LBu. The cross-section of the shoulder circumferential main groove 12 shown in FIG. 6 is a cross-section of the shoulder circumferential main groove 12 at the inner peak LBu. The inclination angle θu of the inner wall surface 52 at the inner peak LBu is also referred to as inclination angle θuu. The inclination angle θs of the outer wall surface 54 is also referred to as inclination angle θsu.

As shown in FIG. 6, in the cross-section of the shoulder circumferential main groove 12 at the inner peak LBu, the groove bottom 12T coincides with the point of intersection of the groove width center line ML and the bottom surface 12B. The inclination angle θuu of the inner wall surface 52 is equal to the inclination angle θsu of the outer wall surface 54. The cross-sectional shape of the shoulder circumferential main groove 12 at the inner peak LBu is symmetric with respect to the groove width center line ML.

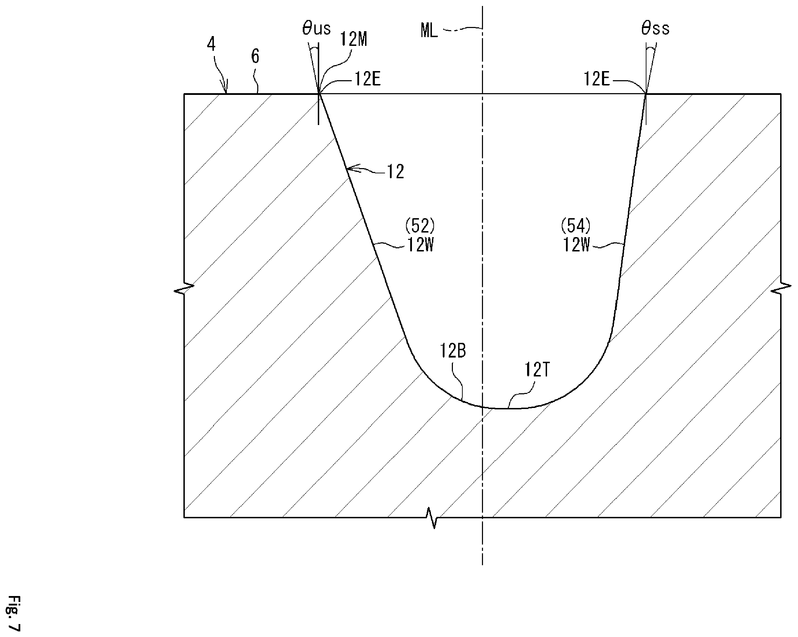

FIG. 7 shows a cross-section of the shoulder circumferential main groove 12 taken along a line VII-VII in FIG. 3. In FIG. 3, the line VII-VII passes through the outer peak LBs. The cross-section of the shoulder circumferential main groove 12 shown in FIG. 7 is a cross-section of the shoulder circumferential main groove 12 at the outer peak LBs. The inclination angle θu of the inner wall surface 52 at the outer peak LBs is also referred to as inclination angle θus. The inclination angle θs of the outer wall surface 54 is also referred to as inclination angle θss.

As shown in FIG. 7, in the cross-section of the shoulder circumferential main groove 12 at the outer peak LBs, the groove bottom 12T is located on the outer wall surface 54 side, in other words, on the end TE side of the tread surface 6, with respect to the point of intersection of the groove width center line ML and the bottom surface 12B. The inclination angle θus of the inner wall surface 52 is larger than the inclination angle θss of the outer wall surface 54. The cross-sectional shape of the shoulder circumferential main groove 12 at the outer peak LBs is not symmetric with respect to the groove width center line ML.

As is obvious from the comparison between FIG. 6 and FIG. 7, the inclination angle θuu of the inner wall surface 52 at the inner peak LBu is different from the inclination angle θus of the inner wall surface 52 at the outer peak LBs. The inclination angle θsu of the outer wall surface 54 at the inner peak LBu is different from the inclination angle θss of the outer wall surface 54 at the outer peak LBs. The degrees of inclination of the inner wall surface 52 and the outer wall surface 54 vary in the circumferential direction.

In the case of the width TW of the tread surface 6 of the tire 2, four circumferential main grooves 10 are normally provided. However, as described above, the three circumferential main grooves 10 are provided on the tread 4 of the tire 2. The land portions 18 formed in the tread 4 each have a larger volume than the volume of each land portion formed in the case where four circumferential main grooves 10 are provided on the tread 4.

The land portions 18 of the tire 2 each have stiffness higher than that of each land portion formed in the case where four circumferential main grooves 10 are provided on the tread 4. Deformation of the land portions 18 is suppressed. The land portions 18 can contribute to reduction of rolling resistance.

As described above, the plurality of crown sipes 40 are provided on each crown narrow land portion 34 of the crown land portion 20. The crown sipes 40 can function as edge components that scratch a road surface. The crown sipes 40 can contribute to improvement of wet performance.

There is a concern that the crown sipes 40 may reduce the stiffness of the crown narrow land portion 34. However, the crown sipes 40 of the tire 2 are shallower than the crown circumferential main groove 14. The influence of the crown sipes 40 on the stiffness of the crown narrow land portion 34 is suppressed. The crown narrow land portion 34 of the tire 2 has required stiffness. The land portions 18 of the tire 2 can contribute to reduction of rolling resistance.

The tread 4 becomes worn. The groove volume of each circumferential main groove 10 is reduced, and the crown sipes 40 which have functioned as edge components disappear. There is a concern that wet performance may be decreased due to wear. However, the crown narrow groove 24 of the tire 2 is deeper than the crown sipes 40. Moreover, the crown narrow groove 24 has the enlarged width portion 28 on the groove bottom 24T side thereof.

Even if the groove volume of each circumferential main groove 10 is reduced due to wear, the enlarged width portion 28 of the crown narrow groove 24 is exposed. The enlarged width portion 28 has a groove width larger than that of the body portion main body 32 of the crown narrow groove 24. The enlarged width portion 28 compensates for the reduced groove volume. The enlarged width portion 28 can contribute to suppressing a decrease in wet performance due to wear.

As described above, in the shoulder circumferential main groove 12, the locus LB of the groove bottom 12T extends in a zigzag manner while passing through the inner peaks LBu and the outer peaks LBs alternately in the circumferential direction. The degrees of inclination of the inner wall surface 52 and the outer wall surface 54 vary in the circumferential direction. Each of the inner wall surface 52 and the outer wall surface 54 extends in the circumferential direction while meandering in accordance with the groove bottom 12T extending in a zigzag manner. The edges of the shoulder circumferential main groove 12, which are exposed due to wear of the tread 4, extend in the circumferential direction while meandering. Even if the crown sipes 40 disappear due to wear, the inner wall surface 52 and the outer wall surface 54 of the shoulder circumferential main groove 12 can function as edge components. The inner wall surface 52 and the outer wall surface 54 of the shoulder circumferential main groove 12 compensate for the lost edge components. The inner wall surface 52 and the outer wall surface 54 can contribute to suppressing a decrease in wet performance due to wear.

The tire 2 can suppress a decrease in wet performance due to wear while reducing rolling resistance.

### [Preferred Tread Pattern]

Hereinafter, a preferred tread pattern will be described in detail.

As shown in FIG. 3, the crown circumferential main groove 14 of the tire 2 includes first peaks 14a closer to the first end TE1 (not shown) of the tread surface 6 and second peaks 14b closer to the second end TE2 of the tread surface 6. The crown circumferential main groove 14 extends in a zigzag manner while passing through the first peaks 14a and the second peaks 14b alternately in the circumferential direction. As described above, the crown circumferential main groove 14 is located on the equator plane CL. In many cases, the crown circumferential main groove 14 is included in a ground-contact surface. A pair of edges 14E forming a groove opening 14M of the crown circumferential main groove 14 each extend in a zigzag manner in the circumferential direction.

The crown circumferential main groove 14 can function as an edge component until a state (hereinafter referred to as end-wear state) where the tread 4 has become worn and replacement of the tire 2 is required is reached. The crown circumferential main groove 14 can contribute to suppressing a decrease in wet performance due to wear. From this viewpoint, it is preferable that the crown circumferential main groove 14 includes the first peaks 14a closer to the first end TE1 of the tread surface 6 and the second peaks 14b closer to the second end TE2 of the tread surface 6, and extends in a zigzag manner while passing through the first peaks 14a and the second peaks 14b alternately in the circumferential direction.

As shown in FIG. 3, the crown narrow groove 24 extends in the circumferential direction while meandering rather than extending straight. In particular, the crown narrow groove 24 of the tire 2 includes inner longitudinal grooves 56 closer to the equator plane CL, outer longitudinal grooves 58 closer to the end TE of the tread surface 6, and connection grooves 60 connecting the inner longitudinal grooves 56 and outer longitudinal grooves 58.

Among the connection grooves 60, the connection grooves 60 connecting the inner longitudinal grooves 56 located on the first direction side in the circumferential direction and the outer longitudinal grooves 58 located on the second direction side in the circumferential direction are also referred to as first connection grooves 60a. The connection grooves 60 connecting the outer longitudinal grooves 58 located on the first direction side in the circumferential direction and the inner longitudinal grooves 56 located on the second direction side in the circumferential direction are also referred to as second connection grooves 60b.

When a unit configured by connecting the inner longitudinal groove 56, the first connection groove 60a, the outer longitudinal groove 58, and the second connection groove 60b in this order is defined as a groove unit, the crown narrow groove 24 is formed by connecting a plurality of such groove units in the circumferential direction. The inner longitudinal grooves 56 and the outer longitudinal grooves 58 are arranged alternately in the circumferential direction.

When a force acts on the crown land portion 20 and the crown land portion 20 is deformed, the wall surfaces of the crown narrow groove 24 come into contact with each other at the body portion main body 32 thereof. Since the crown narrow groove 24 extends in the circumferential direction while meandering, the wall surfaces thereof effectively engage each other. The crown narrow land portions 34 located on both sides of the crown narrow groove 24 restrain each other. The apparent stiffness of the crown land portion 20 is increased. Deformation of the crown land portion 20 is effectively suppressed. The tire 2 can have further reduced rolling resistance. From this viewpoint, it is preferable that the crown narrow groove 24 includes the inner longitudinal grooves 56, the outer longitudinal grooves 58, and the connection grooves 60 connecting the inner longitudinal grooves 56 and the outer longitudinal grooves 58, and the inner longitudinal grooves 56 and the outer longitudinal grooves 58 are arranged alternately in the circumferential direction.

The groove depth HM of the crown narrow groove 24 of the tire 2 is equal to the groove depth DGc of the crown circumferential main groove 14, or the crown narrow groove 24 is shallower than the crown circumferential main groove 14. As described above, the crown narrow groove 24 has the enlarged width portion 28 on the groove bottom 24T side thereof. The enlarged width portion 28 of the crown narrow groove 24 can effectively contribute to compensating for the reduced groove volume in the end-wear state described above. The tire 2 can effectively suppress a decrease in wet performance due to wear.

From this viewpoint, it is preferable that the groove depth HM of the crown narrow groove 24 is equal to the groove depth DGc of the crown circumferential main groove 14, or the crown narrow groove 24 is shallower than the crown circumferential main groove 14. In other words, the ratio (HM/DGc) of the groove depth HM of the crown narrow groove 24 to the groove depth DGc of the crown circumferential main groove 14 is preferably not greater than 1.0.

From the viewpoint that the enlarged width portion 28 can effectively contribute to compensating for the reduced groove volume without the entire crown narrow groove 24 disappearing in the end-wear state, the ratio (HM/DGc) is preferably not less than 0.75.

The ratio (HH/HM) of the groove depth HH of the body portion 26 of the crown narrow groove 24 to the groove depth HM of the crown narrow groove 24 is preferably not less than 0.20 and not greater than 0.50.

When the ratio (HH/HM) is set to be not less than 0.20, the tire 2 can effectively suppress the influence of the enlarged width portion 28 on the stiffness of the crown land portion 20. The crown narrow groove 24 can effectively contribute to increasing the apparent stiffness of the crown land portion 20. The tire 2 can have further reduced rolling resistance. From this viewpoint, the ratio (HH/HM) is more preferably not less than 0.25.

When the ratio (HH/HM) is set to be not greater than 0.50, the enlarged width portion 28 can effectively contribute to compensating for the groove volume reduced due to wear. From this viewpoint, the ratio (HH/HM) is more preferably not greater than 0.45.

As described above, the crown narrow groove 24 is deeper than the crown sipes 40. The crown sipes 40 disappear before the crown narrow groove 24. From the viewpoint of being able to reduce the influence of the crown sipes 40 becoming the enlarged width portion 28 of the crown narrow groove 24 on rolling resistance and on wet performance to be smaller, the ratio (DGp/HM) of the groove depth DGp of each crown sipe 40 to the groove depth HM of the crown narrow groove 24 is preferably not less than 0.30 and more preferably not less than 0.50. From the same viewpoint, the ratio (DGp/HM) is preferably not greater than 0.85.

In the tire 2, it is preferable that the crown sipes 40 are deeper than the body portion 26 of the crown narrow groove 24. Accordingly, the tire 2 can reduce the influence of the crown sipes 40 becoming the enlarged width portion 28 of the crown narrow groove 24 on rolling resistance and on wet performance to be smaller. From this viewpoint, it is more preferable that the ratio (HH/HM) of the groove depth HH of the body portion 26 of the crown narrow groove 24 to the groove depth HM of the crown narrow groove 24 is not less than 0.20 and not greater than 0.50, the ratio (DGp/HM) of the groove depth DGp of each crown sipe 40 to the groove depth HM of the crown narrow groove 24 is not less than 0.30 and not greater than 0.85, and the crown sipes 40 are deeper than the body portion 26 of the crown narrow groove 24.

As described above, the groove depth HM of the crown narrow groove 24 is equal to the groove depth DGc of the crown circumferential main groove 14, or the crown narrow groove 24 is shallower than the crown circumferential main groove 14. As described above, the crown sipes 40 are shallower than the crown circumferential main groove 14.

As shown in FIG. 3, each inner crown sipe 44 of the tire 2 connects the second peak 14b of the crown circumferential main groove 14 and the outer longitudinal groove 58 of the crown narrow groove 24. Each outer crown sipe 48 connects the shoulder circumferential main groove 12 and the inner longitudinal groove 56 of the crown narrow groove 24. As described above, the inner longitudinal grooves 56 and the outer longitudinal grooves 58 are arranged alternately in the circumferential direction. The inner crown sipes 44 and the outer crown sipes 48 are arranged alternately in the circumferential direction.

The inner crown sipes 44 shown in FIG. 3 are inclined with respect to the axial direction. The outer crown sipes 48 are also inclined with respect to the axial direction. The crown sipes 40 are inclined with respect to the axial direction. The crown sipes 40 may extend in the axial direction.

The crown sipes 40 extending in the axial direction or inclined with respect to the axial direction can effectively function as edge components. The tire 2 can have improved wet performance. From this viewpoint, it is preferable that the crown sipes 40 extend in the axial direction or are inclined with respect to the axial direction. It is more preferable that the crown sipes 40 are inclined with respect to the axial direction.

In FIG. 3, an angle θuc represents an angle of the inner crown sipe 44 with respect to the axial direction. The angle θuc is also referred to as inclination angle of the inner crown sipe 44. An angle θsc represents an angle of the outer crown sipe 48 with respect to the axial direction. The angle θsc is also referred to as inclination angle of the outer crown sipe 48.

From the viewpoint that the inner crown sipe 44 can effectively function as an edge component, the inclination angle θuc of the inner crown sipe 44 is preferably not less than 0 degrees and more preferably not less than 5 degrees. From the same viewpoint, the inclination angle θuc is preferably not greater than 45 degrees.

From the viewpoint that the outer crown sipe 48 can effectively function as an edge component, the inclination angle θsc of the outer crown sipe 48 is preferably not less than 0 degrees and more preferably not less than 5 degrees. From the same viewpoint, the inclination angle θsc is preferably not greater than 45 degrees.

As shown in FIG. 3, the ends of the inner crown sipes 44 on the end TE side of the tread surface 6 are located on the second direction side in the circumferential direction with respect to the ends of the inner crown sipes 44 on the equator plane CL side. The ends of the outer crown sipes 48 on the end TE side of the tread surface 6 are located on the first direction side in the circumferential direction with respect to the ends of the outer crown sipes 48 on the equator plane CL side. The direction of inclination of the inner crown sipes 44 is opposite to the direction of inclination of the outer crown sipes 48.

In the tire 2, when a force acts on the crown land portion 20 from the equator plane CL side toward the end TE of the tread surface 6, the wall surfaces of each outer crown sipe 48 come into contact with and support each other. The outer crown narrow land portion 38 can effectively restrain the movement of the inner crown narrow land portion 36. Accordingly, the apparent stiffness of the crown land portion 20 is increased. When a force acts on the crown land portion 20 from the end TE side of the tread surface 6 toward the equator plane CL, the wall surfaces of each inner crown sipe 44 come into contact with and support each other. The inner crown narrow land portion 36 can effectively restrain the movement of the outer crown narrow land portion 38. In this case as well, the apparent stiffness of the crown land portion 20 is increased. In both cases, deformation of the crown land portion 20 is effectively suppressed. The tire 2 can have further reduced rolling resistance. From this viewpoint, it is preferable that the direction of inclination of the crown sipes 40 on the inner crown narrow land portion 36 is opposite to the direction of inclination of the crown sipes 40 on the outer crown narrow land portion 38.

From the viewpoint of being able to effectively suppress a decrease in wet performance due to wear while reducing rolling resistance, it is more preferable that the crown sipes 40 provided on each of the two crown narrow land portions 34 are inclined with respect to the axial direction, the direction of inclination of the inner crown sipes 44 is opposite to the direction of inclination of the outer crown sipes 48, each inner crown sipe 44 connects the second peak 14b of the crown circumferential main groove 14 and the outer longitudinal groove 58 of the crown narrow groove 24, and each outer crown sipe 48 connects the inner longitudinal groove 56 of the crown narrow groove 24 and the shoulder circumferential main groove 12.

As described above, the degrees of inclination of the inner wall surface 52 and the outer wall surface 54 of the shoulder circumferential main groove 12 vary in the circumferential direction.

It is preferable that at the inner peak LBu in the locus LB of the groove bottom 12T of the shoulder circumferential main groove 12, the inclination angle θuu of the inner wall surface 52 is equal to the inclination angle θsu of the outer wall surface 54, or the inclination angle θuu of the inner wall surface 52 is larger than the inclination angle θsu of the outer wall surface 54, and at the outer peak LBs, the inclination angle θus of the inner wall surface 52 is larger than the inclination angle θss of the outer wall surface 54. Accordingly, the inner wall surface 52 and the outer wall surface 54 of the shoulder circumferential main groove 12 can effectively function as edge components. The inner wall surface 52 and the outer wall surface 54 can compensate for the edge components lost due to wear. The inner wall surface 52 and the outer wall surface 54 can contribute to suppressing a decrease in wet performance due to wear.

From the viewpoint that the inner wall surface 52 and the outer wall surface 54 can effectively contribute to suppressing a decrease in wet performance due to wear, it is more preferable that as shown in FIG. 3, the locus LB of the groove bottom 12T of the shoulder circumferential main groove 12 is located between the center line ML of the groove width WGs at the groove opening 12M of the shoulder circumferential main groove 12 and the edge 12E on the end TE side of the tread surface 6 out of the pair of edges 12E forming the groove opening 12M.

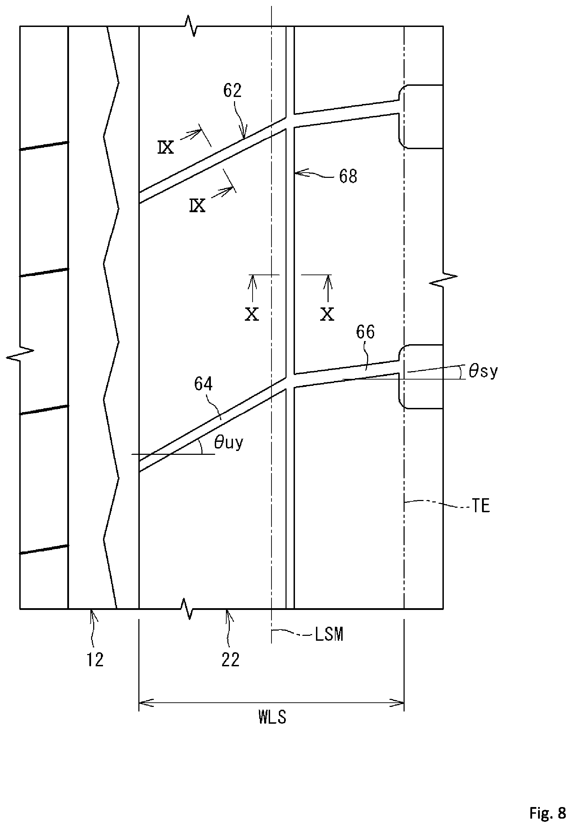

FIG. 8 shows a part of the tread surface 6 shown in FIG. 1. FIG. 8 shows the shoulder land portion 22. Each of the two shoulder land portions 22 provided in the tread 4 of the tire 2 has shoulder lateral grooves 62.

In FIG. 8, a length indicated by a double-headed arrow WLS is the maximum width of the shoulder land portion 22. In each shoulder land portion 22 of the tire 2, the ratio (WLS/TW) of the maximum width WLS to the width TW of the tread surface 6 is not less than 15% and not greater than 25%.

In FIG. 8, an alternate long and short dash line LSM is a maximum width center line of the shoulder land portion 22.

Each shoulder lateral groove 62 connects the shoulder circumferential main groove 12 and the end TE of the tread surface 6. The shoulder lateral groove 62 traverses the shoulder land portion 22.

In the shoulder lateral groove 62 shown in FIG. 8, an end portion thereof on the equator plane CL side is located on the second direction side in the circumferential direction with respect to an end portion thereof on the end TE side of the tread surface 6. The shoulder lateral groove 62 is inclined with respect to the axial direction such that the end portion thereof on the equator plane CL side is located on the second direction side in the circumferential direction with respect to the end portion thereof on the end TE side of the tread surface 6.

Each shoulder lateral groove 62 includes an inner shoulder lateral groove 64 located on the equator plane CL side and an outer shoulder lateral groove 66 located on the end TE side of the tread surface 6.

The inner shoulder lateral groove 64 connects the shoulder circumferential main groove 12 and the outer shoulder lateral groove 66. The outer shoulder lateral groove 66 connects the inner shoulder lateral groove 64 and the end TE of the tread surface 6.

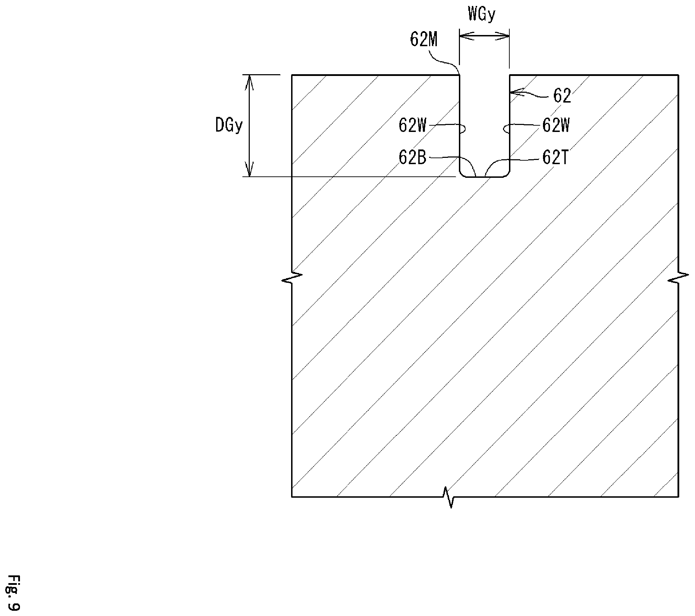

FIG. 9 is a cross-sectional view of the inner shoulder lateral groove 64 taken along a line IX-IX in FIG. 8. FIG. 9 shows a cross-section of the inner shoulder lateral groove 64 along a plane perpendicular to the length direction of the inner shoulder lateral groove 64. The cross-sectional shape of the outer shoulder lateral groove 66 is the same as that of the inner shoulder lateral groove 64. The cross-sectional shape of each shoulder lateral groove 62 will be described using the inner shoulder lateral groove 64 as an example.

The shoulder lateral groove 62 extends straight in the depth direction thereof. The shoulder lateral groove 62 includes a pair of wall surfaces 62W including a groove opening 62M, and a bottom surface 62B including a groove bottom 62T.

In FIG. 9, a double-headed arrow WGy indicates the groove width at the groove opening 62M of the shoulder lateral groove 62. A double-headed arrow DGy indicates the groove depth of the shoulder lateral groove 62.

The groove width WGy of the shoulder lateral groove 62 of the tire 2 is not less than 1.0 mm.

The shoulder lateral grooves 62 of the tire 2 are shallower than the crown sipes 40 provided on the crown narrow land portions 34. Even though the shoulder lateral grooves 62 are provided on the shoulder land portion 22, the stiffness of the shoulder land portion 22 is appropriately maintained. The tire 2 can improve uneven wear resistance while reducing rolling resistance. From this viewpoint, it is preferable that the shoulder lateral grooves 62 are shallower than the crown sipes 40. Specifically, the ratio (DGy/DGp) of the groove depth DGy of each shoulder lateral groove 62 to the groove depth DGp of each crown sipe 40 is preferably not greater than 0.50 and more preferably not greater than 0.30. From the viewpoint that the shoulder lateral groove 62 can effectively contribute to improvement of wet performance, the ratio (DGy/DGp) is preferably not less than 0.10.

As described above, each shoulder lateral groove 62 of the tire 2 includes the inner shoulder lateral groove 64 and the outer shoulder lateral groove 66. As shown in FIG. 8, each of the inner shoulder lateral groove 64 and the outer shoulder lateral groove 66 is inclined with respect to the axial direction. The shoulder land portion 22 may be formed such that the inner shoulder lateral groove 64 extends in the axial direction. The shoulder land portion 22 may be formed such that the outer shoulder lateral groove 66 extends in the axial direction.

Each of the inner shoulder lateral groove 64 and the outer shoulder lateral groove 66 functions as an edge component. Each shoulder lateral groove 62 including the inner shoulder lateral groove 64 and the outer shoulder lateral groove 66 can contribute to improvement of wet performance. From the viewpoint that the tire 2 can have improved wet performance, it is preferable that the shoulder land portion 22 has the shoulder lateral grooves 62 traversing the shoulder land portion 22, each shoulder lateral groove 62 includes the inner shoulder lateral groove 64 located on the equator plane CL side and the outer shoulder lateral groove 66 located on the end TE side of the tread surface 6, and each of the inner shoulder lateral groove 64 and the outer shoulder lateral groove 66 extends in the axial direction or is inclined with respect to the axial direction.

In FIG. 8, an angle θuy represents an angle of the inner shoulder lateral groove 64 with respect to the axial direction. The angle θuy is also referred to as inclination angle of the inner shoulder lateral groove 64. An angle θsy represents an angle of the outer shoulder lateral groove 66 with respect to the axial direction. The angle θsy is also referred to as inclination angle of the outer shoulder lateral groove 66.

From the viewpoint that the inner shoulder lateral groove 64 can effectively function as an edge component, the inclination angle θuy of the inner shoulder lateral groove 64 is preferably not less than 0 degrees and more preferably not less than 5 degrees. From the same viewpoint, the inclination angle θuy is preferably not greater than 45 degrees.

From the viewpoint that the outer shoulder lateral groove 66 can effectively function as an edge component, the inclination angle θsy of the outer shoulder lateral groove 66 is preferably not less than 0 degrees and more preferably not less than 5 degrees. From the same viewpoint, the inclination angle θsy is preferably not greater than 45 degrees.

As shown in FIG. 8, the inclination angle θuy of the inner shoulder lateral groove 64 is larger than the inclination angle θsy of the outer shoulder lateral groove 66. Accordingly, the shoulder lateral groove 62 as a whole can effectively function as an edge component. The tire 2 can effectively improve wet performance. From this viewpoint, it is preferable that the inclination angle θuy of the inner shoulder lateral groove 64 is larger than the inclination angle θsy of the outer shoulder lateral groove 66.

As shown in FIG. 8, the shoulder land portion 22 has a shoulder narrow groove 68 extending continuously in the circumferential direction.

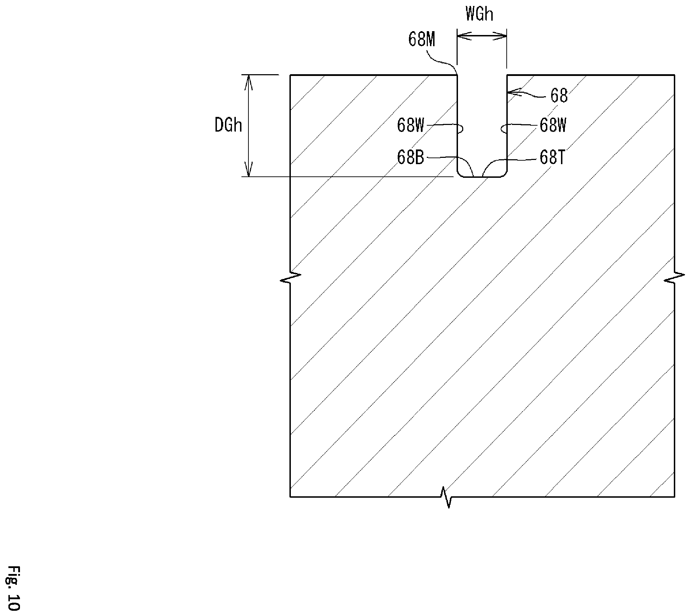

FIG. 10 is a cross-sectional view of the shoulder narrow groove 68 taken along a line X-X in FIG. 8. FIG. 10 shows a cross-section of the shoulder narrow groove 68 along a plane perpendicular to the length direction of the shoulder narrow groove 68.

The shoulder narrow groove 68 extends straight in the depth direction thereof. The shoulder narrow groove 68 has a pair of wall surfaces 68W including a groove opening 68M, and a bottom surface 68B including a groove bottom 68T.

In FIG. 10, a double-headed arrow WGh indicates the groove width at the groove opening 68M of the shoulder narrow groove 68. A double-headed arrow DGh indicates the groove depth of the shoulder narrow groove 68.

The groove width WGh of the shoulder narrow groove 68 of the tire 2 is not less than 1.0 mm.

The shoulder narrow groove 68 of the tire 2 is shallower than the crown sipes 40 provided on the crown narrow land portions 34. Even though the shoulder narrow groove 68 is provided on the shoulder land portion 22 in addition to the shoulder lateral grooves 62, the stiffness of the shoulder land portion 22 is appropriately maintained. The tire 2 can improve uneven wear resistance while reducing rolling resistance. From this viewpoint, it is preferable that the shoulder narrow groove 68 is shallower than the crown sipes 40. Specifically, the ratio (DGh/DGp) of the groove depth DGh of the shoulder narrow groove 68 to the groove depth DGp of each crown sipe 40 is preferably not greater than 0.50 and more preferably not greater than 0.30. From the viewpoint that the shoulder narrow groove 68 can effectively contribute to improvement of wet performance, the ratio (DGh/DGp) is preferably not less than 0.10.

As shown in FIG. 8, the shoulder narrow groove 68 intersects the shoulder lateral grooves 62. Accordingly, water existing between a wet road surface and the tire 2 is effectively drained through the shoulder lateral grooves 62. The tire 2 can have improved wet performance. From this viewpoint, it is preferable that the shoulder narrow groove 68 intersects the shoulder lateral grooves 62.

The shoulder narrow groove 68 shown in FIG. 8 intersects each shoulder lateral groove 62 at the boundary between the inner shoulder lateral groove 64 and the outer shoulder lateral groove 66. The inner shoulder lateral groove 64 connects the shoulder circumferential main groove 12 and the shoulder narrow groove 68. The outer shoulder lateral groove 66 connects the shoulder narrow groove 68 and the end TE of the tread surface 6. As described above, the inclination angle θuy of the inner shoulder lateral groove 64 is larger than the inclination angle θsy of the outer shoulder lateral groove 66. This combination of the shoulder narrow groove 68 and the shoulder narrow groove 68 can contribute to improving wet performance while reducing rolling resistance and improving uneven wear resistance. From this viewpoint, in the case where the shoulder narrow groove 68 intersects each shoulder lateral groove 62, it is more preferable that the inner shoulder lateral groove 64 connects the shoulder narrow groove 68 and the shoulder circumferential main groove 12, the outer shoulder lateral groove 66 connects the end TE of the tread surface 6 and the shoulder narrow groove 68, and the inclination angle θuy of the inner shoulder lateral groove 64 is larger than the inclination angle θsy of the outer shoulder lateral groove 66. In this case, it is further preferable that the shoulder narrow groove 68 is located on the end TE side of the tread surface 6 with respect to the maximum width center line LSM of the shoulder land portion 22.

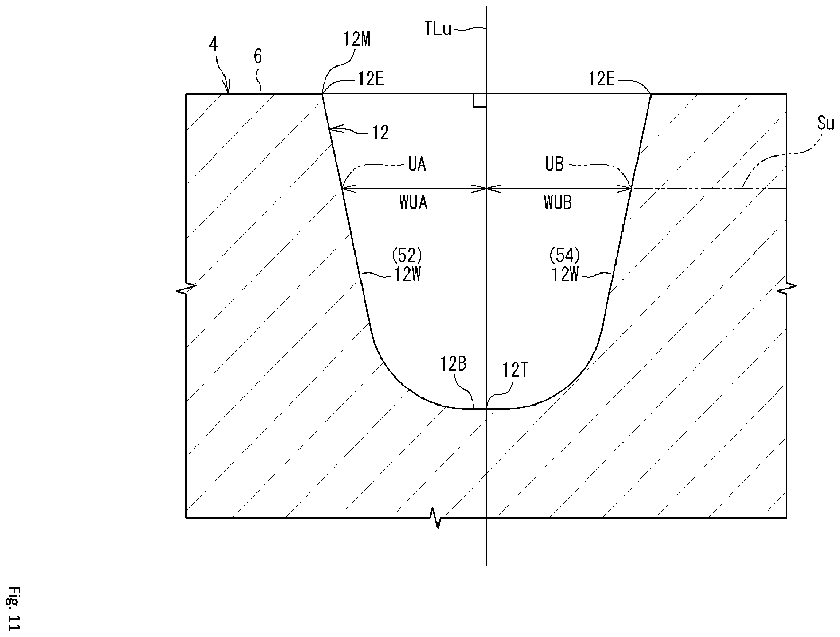

FIG. 11 shows a cross-section of the shoulder circumferential main groove 12. This cross-section is the same as the cross-section of the shoulder circumferential main groove 12 shown in FIG. 6. The cross-section shown in FIG. 11 is the cross-section of the shoulder circumferential main groove 12 at the inner peak LBu of the groove bottom 12T.

In FIG. 11, an alternate long and two short dashes line Su represents the groove bottom 62T of the shoulder lateral groove 62. A position indicated by reference character UA is the position, on the inner wall surface 52, corresponding to the groove bottom 62T. A position indicated by reference character UB is the position, on the outer wall surface 54, corresponding to the groove bottom 62T. A solid line TLu is a normal line that is normal to a line segment connecting the left and right edges 12E and passes through the groove bottom 12T of the shoulder circumferential main groove 12.

A double-headed arrow WUA indicates the distance from the normal line TLu to the position UA on the inner wall surface 52. The distance WUA is measured along a line segment connecting the position UA and the position UB. A double-headed arrow WUB indicates the distance from the normal line TLu to the position UB on the outer wall surface 54. Similar to the distance WUA, the distance WUB is also measured along the line segment connecting the position UA and the position UB.

The position UA and the position UB are portions that become the groove opening of the shoulder circumferential main groove 12 when the shoulder lateral groove 62 disappears due to wear and only the groove bottom 62T is left.

The distance WUA represents the distance from the groove bottom 12T to the inner wall surface 52 at the time when the shoulder lateral groove 62 disappears. The distance WUB represents the distance from the groove bottom 12T to the outer wall surface 54 at the time when the shoulder lateral groove 62 disappears.

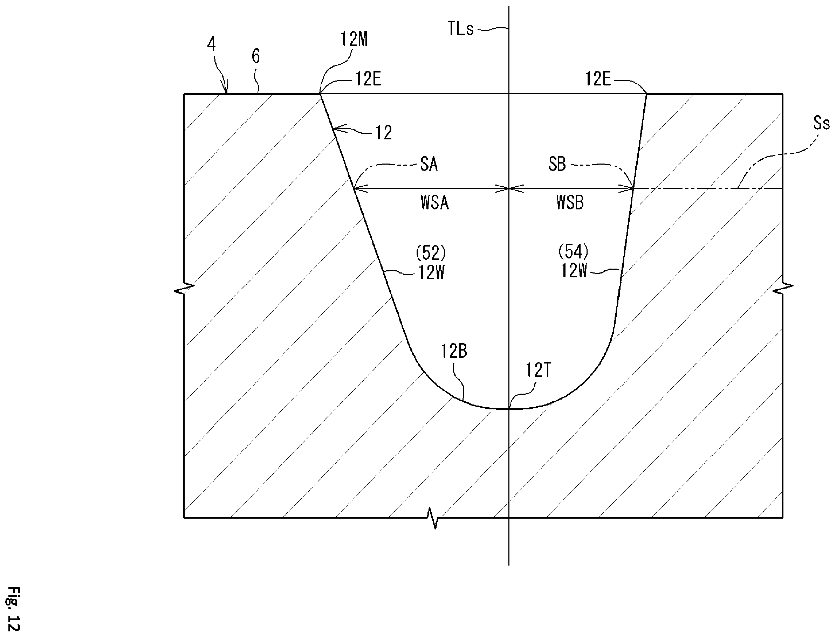

FIG. 12 shows a cross-section of the shoulder circumferential main groove 12. This cross-section is the same as the cross-section of the shoulder circumferential main groove 12 shown in FIG. 7. The cross-section shown in FIG. 12 is the cross-section of the shoulder circumferential main groove 12 at the outer peak LBs of the groove bottom 12T.

In FIG. 12, similar to the above-described alternate long and two short dashes line Su, an alternate long and two short dashes line Ss represents the groove bottom 62T of the shoulder lateral groove 62. A position indicated by reference character SA is the position, on the inner wall surface 52, corresponding to the groove bottom 62T. A position indicated by reference character SB is the position, on the outer wall surface 54, corresponding to the groove bottom 62T. A solid line TLs is a normal line that is normal to a line segment connecting the left and right edges 12E and passes through the groove bottom 12T of the shoulder circumferential main groove 12.

A double-headed arrow WSA indicates the distance from the normal line TLs to the position SA on the inner wall surface 52. The distance WSA is measured along a line segment connecting the position SA and the position SB. A double-headed arrow WSB indicates the distance from the normal line TLs to the position SB on the outer wall surface 54. Similar to the distance WSA, the distance WSB is also measured along the line segment connecting the position SA and the position SB.

The position SA and the position SB are portions that become the groove opening of the shoulder circumferential main groove 12 when the shoulder lateral groove 62 disappears due to wear and only the groove bottom 62T is left. The position SA and the position SB, together with the above-described positions UA and UB, are included in the groove opening of the shoulder circumferential main groove 12 that is formed when the shoulder lateral groove 62 disappears due to wear and only the groove bottom 62T is left.

The distance WSArepresents the distance from the groove bottom 12T to the inner wall surface 52 at the time when the shoulder lateral groove 62 disappears. The distance WSB represents the distance from the groove bottom 12T to the outer wall surface 54 at the time when the shoulder lateral groove 62 disappears.

In the cross-section of the shoulder circumferential main groove 12 at the inner peak LBu of the groove bottom 12T, the ratio (WUA/WUB) of the distance WUA from the groove bottom 12T to the inner wall surface 52 to the distance WUB from the groove bottom 12T to the outer wall surface 54 at the time when the shoulder lateral groove 62 disappears is preferably not less than 0.8 and not greater than 1.2. In addition, in the cross-section of the shoulder circumferential main groove 12 at the outer peak LBs of the groove bottom 12T, the ratio (WSA/WSB) of the distance WSA from the groove bottom 12T to the inner wall surface 52 to the distance WSB from the groove bottom 12T to the outer wall surface 54 at the time when the shoulder lateral groove 62 disappears is preferably not less than 1.1 and not greater than 1.7.

When the ratio (WUA/WUB) and the ratio (WSA/WSB) are set in the above-described ranges, respectively, the inner wall surface 52 and the outer wall surface 54 of the shoulder circumferential main groove 12 can effectively function as edge components. The inner wall surface 52 and the outer wall surface 54 can compensate for the edge components lost due to wear. The inner wall surface 52 and the outer wall surface 54 can contribute to suppressing a decrease in wet performance due to wear. From this viewpoint, it is more preferable that the ratio (WUA/WUB) is not less than 0.9 and not greater than 1.1 and the ratio (WSA/WSB) is not less than 1.2 and not greater than 1.6.

As is obvious from the above description, according to the present invention, a heavy duty tire that can suppress a decrease in wet performance due to wear while reducing rolling resistance, is obtained.

The above-described technology capable of suppressing a decrease in wet performance due to wear even while reducing rolling resistance can be applied to various tires.

## Claims

1. A heavy duty tire (2) comprising a tread (4) having a tread surface (6) configured to come into contact with a road surface, wherein
the tread (4) has a plurality of circumferential main grooves (10) aligned in an axial direction and extending continuously in a circumferential direction,
the plurality of circumferential main grooves (10) include a crown circumferential main groove (14) located on an equator plane (CL) and a pair of shoulder circumferential main grooves (12) each located on an outermost side in the axial direction,
the plurality of circumferential main grooves (10) divide the tread (4) into a plurality of land portions (18),
the plurality of land portions (18) include a pair of crown land portions (20) closest to the equator plane (CL) and a pair of shoulder land portions (22) each located axially outward of the shoulder circumferential main groove (12) and including an end (TE) of the tread surface (6),
each of the crown land portions (20) has a crown narrow groove (24) extending continuously in the circumferential direction,
the crown narrow groove (24) divides the crown land portion (20) into two crown narrow land portions (34),
each of the crown narrow land portions (34) has a plurality of crown sipes (40) traversing the crown narrow land portion (34) and shallower than the crown circumferential main groove (14),
the crown narrow groove (24) is deeper than the crown sipes (40),
each crown narrow groove (24) includes a body portion main body (32) and an enlarged width portion (28) located radially inward of the body portion main body (32) and having a groove width larger than a groove width of the body portion main body (32),
each of the shoulder circumferential main grooves (12) has an inner wall surface (52) closer to the equator plane (CL), an outer wall surface (54) closer to the end (TE) of the tread surface (6), and a bottom surface (12B) extending between the inner wall surface (52) and the outer wall surface (54) and including a groove bottom (12T), and
a locus (LB) of the groove bottom (12T) in each of the shoulder circumferential main grooves (12) includes inner peaks (LBu) closer to the equator plane (CL) and outer peaks (LBs) closer to the end (TE) of the tread surface (6), and extends in a zigzag manner while passing through the inner peaks (LBu) and the outer peaks (LBs) alternately in the circumferential direction,
**characterized in that** each crown narrow groove (24) includes inner longitudinal grooves (56) closer to the equator plane (CL), outer longitudinal grooves (58) closer to the end (TE) of the tread surface (6), and connection grooves (60) connecting the inner longitudinal grooves (56) and the outer longitudinal grooves (58), and
the inner longitudinal grooves (56) and the outer longitudinal grooves (58) are arranged alternately in the circumferential direction.

2. The heavy duty tire (2) according to claim 1, wherein the crown circumferential main groove (14) includes first peaks (14a) closer to a first end (TE1) of the tread surface (6) and second peaks (14b) closer to a second end (TE2) of the tread surface (6), and extends in a zigzag manner while passing through the first peaks (14a) and the second peaks (14b) alternately in the circumferential direction.

3. The heavy duty tire (2) according to claim 1 or 2, wherein a groove depth (HM) of the crown narrow groove (24) is equal to a groove depth (DGc) of the crown circumferential main groove (14), or the crown narrow groove (24) is shallower than the crown circumferential main groove (14).

4. The heavy duty tire (2) according to any one of claims 1 to 3, wherein the crown sipes (40) extend in the axial direction or are inclined with respect to the axial direction.

5. The heavy duty tire (2) according to claim 4, wherein
of the two crown narrow land portions (34), the crown narrow land portion (34) closer to the equator plane (CL) is an inner crown narrow land portion (36), and the crown narrow land portion (34) closer to the end (TE) of the tread surface (6) is an outer crown narrow land portion (38), and
a direction of inclination of the crown sipes (40) on the inner crown narrow land portion (36) is opposite to a direction of inclination of the crown sipes (40) on the outer crown narrow land portion (38).

6. The heavy duty tire (2) according to any one of claims 1 to 3, wherein
the crown sipes (40) are inclined with respect to the axial direction,
of the two crown narrow land portions (34), the crown narrow land portion (34) closer to the equator plane (CL) is an inner crown narrow land portion (36), and the crown narrow land portion (34) closer to the end (TE) of the tread surface (6) is an outer crown narrow land portion (38),
a direction of inclination of the crown sipes (40) on the inner crown narrow land portion (36) is opposite to a direction of inclination of the crown sipes (40) on the outer crown narrow land portion (38),
the crown narrow groove (24) includes inner longitudinal grooves (56) closer to the equator plane (CL), outer longitudinal grooves (58) closer to the end (TE) of the tread surface (6), and connection grooves (60) connecting the inner longitudinal grooves (56) and the outer longitudinal grooves (58),
the inner longitudinal grooves (56) and the outer longitudinal grooves (58) are arranged alternately in the circumferential direction,
the crown sipes (40) on the inner crown narrow land portion (36) connect the second peaks (14b) of the crown circumferential main groove (14) and the outer longitudinal grooves (58) of the crown narrow groove (24), and
the crown sipes (40) on the outer crown narrow land portion (38) connect the inner longitudinal grooves (56) of the crown narrow groove (24) and the shoulder circumferential main groove (12).

7. The heavy duty tire (2) according to any one of claims 1 to 6, wherein
the inner wall surface (52) and the outer wall surface (54) of the shoulder circumferential main groove (12) are inclined with respect to a normal line of the tread surface (6) at a groove opening (12M) of the shoulder circumferential main groove (12),
at the inner peak (LBu) included in the locus (LB) of the groove bottom (12T) of the shoulder circumferential main groove (12), an inclination angle (θu) of the inner wall surface (52) is equal to an inclination angle (θs) of the outer wall surface (54), or larger than the inclination angle (θs) of the outer wall surface (54), and
at the outer peak (LBs) included in the locus (LB) of the groove bottom (12T) of the shoulder circumferential main groove (12), the inclination angle (θu) of the inner wall surface (52) is larger than the inclination angle (θs) of the outer wall surface (54).

8. The heavy duty tire (2) according to claim 7, wherein the locus (LB) of the groove bottom (12T) of the shoulder circumferential main groove (12) is located between a center line (ML) of a groove width (WGs) at the groove opening (12M) of the shoulder circumferential main groove (12) and an edge (12E) on the end (TE) side of the tread surface (6) out of a pair of edges edge (12E) forming the groove opening (12M).

9. The heavy duty tire (2) according to any one of claims 1 to 8, wherein
each of the shoulder land portions (22) has shoulder lateral grooves (62) which traverse the shoulder land portion (22),
each of the shoulder lateral grooves (62) includes an inner shoulder lateral groove (64) located on the equator plane (CL) side and an outer shoulder lateral groove (66) located on the end (TE) side of the tread surface (6), and
each of the inner shoulder lateral groove (64) and the outer shoulder lateral groove (66) extends in the axial direction or is inclined with respect to the axial direction.

10. The heavy duty tire (2) according to claim 9, wherein the shoulder lateral grooves (62) are shallower than the crown sipes (40).

11. The heavy duty tire (2) according to claim 9 or 10, wherein
each of the shoulder land portions (22) has a shoulder narrow groove (68) extending continuously in the circumferential direction,
the shoulder narrow groove (68) is shallower than the crown sipes (40), and
the shoulder narrow groove (68) intersects the shoulder lateral grooves (62).

12. The heavy duty tire (2) according to claim 11, wherein
the inner shoulder lateral groove (64) connects the shoulder narrow groove (68) and the shoulder circumferential main groove (12),
the outer shoulder lateral groove (66) connects the end (TE) of the tread surface (6) and the shoulder narrow groove (68), and
an inclination angle (θuy) of the inner shoulder lateral groove (64) is larger than an inclination angle (θsy) of the outer shoulder lateral groove (66).

13. The heavy duty tire (2) according to any one of claims 1 to 12, wherein a ratio (HM/DGc) of the groove depth (HM) of the crown narrow groove (24) to the groove depth (DGc) of the crown circumferential main groove (14) is not less than 0.75 and not greater than 1.0.

14. The heavy duty tire (2) according to any one of claims 1 to 13, wherein a ratio (DGp/HM) of a groove depth (DGp) of each crown sipe (40) to the groove depth (HM) of the crown narrow groove (24) is not less than 0.30 and not greater than 0.85.

## Patentansprüche

1. Schwerlastreifen (2), umfassend eine Lauffläche (4) mit einer Laufflächenoberfläche (6), die konfiguriert ist, um mit einer Straßenoberfläche in Kontakt zu kommen, wobei
die Lauffläche (4) eine Vielzahl von Umfangshauptrillen (10) aufweist, die in einer axialen Richtung ausgerichtet sind und sich kontinuierlich in einer Umfangsrichtung erstrecken,
die Vielzahl von Umfangshauptrillen (10) eine Kronenumfangshauptrille (14), die sich auf einer Äquatorebene (CL) befindet, und ein Paar Schulterumfangshauptrillen (12), die sich jeweils auf einer äußersten Seite in der axialen Richtung befinden, umfasst,
die Vielzahl von Umfangshauptrillen (10) die Lauffläche (4) in eine Vielzahl von Landabschnitten (18) unterteilt,
die Vielzahl von Landabschnitten (18) ein Paar Kronenlandabschnitte (20), die der Äquatorebene (CL) am nächsten sind, und ein Paar Schulterlandabschnitte (22), die sich jeweils axial außen von der Schulterumfangshauptrille (12) befinden und ein Ende (TE) der Laufflächenoberfläche (6) umfassen, umfasst,
jeder der Kronenlandabschnitte (20) eine schmale Kronenrille (24) aufweist, die sich kontinuierlich in der Umfangsrichtung erstreckt,
die schmale Kronenrille (24) den Kronenlandabschnitt (20) in zwei schmale Kronenlandabschnitte (34) unterteilt,
jeder der schmalen Kronenlandabschnitte (34) eine Vielzahl von Kronenfeinschnitten (40) aufweist, die den schmalen Kronenlandabschnitt (34) durchqueren und flacher als die Kronenumfangshauptrille (14) sind,
die schmale Kronenrille (24) tiefer als die Kronenfeinschnitte (40) ist,
jede schmale Kronenrille (24) einen Körperabschnitthauptkörper (32) und einen Abschnitt (28) mit vergrößerter Breite umfasst, der sich radial innen von dem Körperabschnitthauptkörper (32) befindet und eine Rillenbreite aufweist, die größer als eine Rillenbreite des Körperabschnitthauptkörpers (32) ist,
jede der Schulterumfangshauptrillen (12) eine Innenwandoberfläche (52), die näher an der Äquatorebene (CL) ist, eine Außenwandoberfläche (54), die näher an dem Ende (TE) der Laufflächenoberfläche (6) ist, und eine Bodenoberfläche (12B), die sich zwischen der Innenwandoberfläche (52) und der Außenwandoberfläche (54) erstreckt und einen Rillenboden (12T) umfasst, aufweist, und
eine Ortskurve (LB) des Rillenbodens (12T) in jeder der Schulterumfangshauptrillen (12) innere Spitzen (LBu), die näher an der Äquatorebene (CL) sind, und äußere Spitzen (LBs), die näher an dem Ende (TE) der Laufflächenoberfläche (6) sind, umfasst und sich zickzackartig erstreckt, während sie abwechselnd in der Umfangsrichtung durch die inneren Spitzen (LBu) und die äußeren Spitzen (LBs) verläuft,
**dadurch gekennzeichnet, dass** jede schmale Kronenrille (24) innere Längsrillen (56), die näher an der Äquatorebene (CL) sind, äußere Längsrillen (58), die näher an dem Ende (TE) der Laufflächenoberfläche (6) sind, und Verbindungsrillen (60), die die inneren Längsrillen (56) und die äußeren Längsrillen (58) verbinden, umfasst, und
die inneren Längsrillen (56) und die äußeren Längsrillen (58) in der Umfangsrichtung abwechselnd angeordnet sind.

2. Schwerlastreifen (2) nach Anspruch 1, wobei die Kronenumfangshauptrille (14) erste Spitzen (14a), die näher an einem ersten Ende (TE1) der Laufflächenoberfläche (6) sind, und zweite Spitzen (14b), die näher an einem zweiten Ende (TE2) der Laufflächenoberfläche (6) sind, umfasst und sich zickzackartig erstreckt, während sie in der Umfangsrichtung abwechselnd durch die ersten Spitzen (14a) und die zweiten Spitzen (14b) verläuft.

3. Schwerlastreifen (2) nach Anspruch 1 oder 2, wobei eine Rillentiefe (HM) der schmalen Kronenrille (24) gleich einer Rillentiefe (DGc) der Kronenumfangshauptrille (14) ist oder die schmale Kronenrille (24) flacher als die Kronenumfangshauptrille (14) ist.

4. Schwerlastreifen (2) nach einem der Ansprüche 1 bis 3, wobei sich die Kronenfeinschnitte (40) in der axialen Richtung erstrecken oder in Bezug auf die axiale Richtung geneigt sind.

5. Schwerlastreifen (2) nach Anspruch 4, wobei
von den zwei schmalen Kronenlandabschnitten (34) der schmale Kronenlandabschnitt (34), der näher an der Äquatorebene (CL) ist, ein innerer schmaler Kronenlandabschnitt (36) ist und der schmale Kronenlandabschnitt (34), der näher an dem Ende (TE) der Laufflächenoberfläche (6) ist, ein äußerer schmaler Kronenlandabschnitt (38) ist, und
eine Neigungsrichtung der Kronenfeinschnitte (40) an dem inneren schmalen Kronenlandabschnitt (36) entgegengesetzt zu einer Neigungsrichtung der Kronenfeinschnitte (40) an dem äußeren schmalen Kronenlandabschnitt (38) ist.

6. Schwerlastreifen (2) nach einem der Ansprüche 1 bis 3, wobei
die Kronenfeinschnitte (40) in Bezug auf die axiale Richtung geneigt sind,
von den zwei schmalen Kronenlandabschnitten (34) der schmale Kronenlandabschnitt (34), der näher an der Äquatorebene (CL) ist, ein innerer schmaler Kronenlandabschnitt (36) ist und der schmale Kronenlandabschnitt (34), der näher an dem Ende (TE) der Laufflächenoberfläche (6) ist, ein äußerer schmaler Kronenlandabschnitt (38) ist,
eine Neigungsrichtung der Kronenfeinschnitte (40) an dem inneren schmalen Kronenlandabschnitt (36) entgegengesetzt zu einer Neigungsrichtung der Kronenfeinschnitte (40) an dem äußeren schmalen Kronenlandabschnitt (38) ist,
die schmale Kronenrille (24) innere Längsrillen (56), die näher an der Äquatorebene (CL) sind, äußere Längsrillen (58), die näher an dem Ende (TE) der Laufflächenoberfläche (6) sind, und Verbindungsrillen (60), die die inneren Längsrillen (56) und die äußeren Längsrillen (58) verbinden, umfasst,
die inneren Längsrillen (56) und die äußeren Längsrillen (58) in der Umfangsrichtung abwechselnd angeordnet sind,
die Kronenfeinschnitte (40) an dem inneren schmalen Kronenlandabschnitt (36) die zweiten Spitzen (14b) der Kronenumfangshauptrille (14) und die äußeren Längsrillen (58) der schmalen Kronenrille (24) verbinden, und
die Kronenfeinschnitte (40) an dem äußeren schmalen Kronenlandabschnitt (38) die inneren Längsrillen (56) der schmalen Kronenrille (24) und die Schulterumfangshauptrille (12) verbinden.

7. Schwerlastreifen (2) nach einem der Ansprüche 1 bis 6, wobei
die Innenwandoberfläche (52) und die Außenwandoberfläche (54) der Schulterumfangshauptrille (12) in Bezug auf eine Normallinie der Laufflächenoberfläche (6) an einer Rillenöffnung (12M) der Schulterumfangshauptrille (12) geneigt sind,
an der inneren Spitze (LBu), die in der Ortskurve (LB) des Rillenbodens (12T) der Schulterumfangshauptrille (12) enthalten ist, ein Neigungswinkel (θu) der Innenwandoberfläche (52) gleich einem Neigungswinkel (θs) der Außenwandoberfläche (54) oder größer als der Neigungswinkel (θs) der Außenwandoberfläche (54) ist, und
an der äußeren Spitze (LBs), die in der Ortskurve (LB) des Rillenbodens (12T) der Schulterumfangshauptrille (12) enthalten ist, der Neigungswinkel (θu) der Innenwandoberfläche (52) größer als der Neigungswinkel (θs) der Außenwandoberfläche (54) ist.

8. Schwerlastreifen (2) nach Anspruch 7, wobei sich die Ortskurve (LB) des Rillenbodens (12T) der Schulterumfangshauptrille (12) zwischen einer Mittellinie (ML) einer Rillenbreite (WGs) an der Rillenöffnung (12M) der Schulterumfangshauptrille (12) und einer Kante (12E) auf der Seite des Endes (TE) der Laufflächenoberfläche (6) von einem Paar Kanten (12E), die die Rillenöffnung (12M) bilden, befindet.

9. Schwerlastreifen (2) nach einem der Ansprüche 1 bis 8, wobei
jeder der Schulterlandabschnitte (22) Schulterquerrillen (62) aufweist, die den Schulterlandabschnitt (22) durchqueren,
jede der Schulterquerrillen (62) eine innere Schulterquerrille (64), die sich auf der Seite der Äquatorebene (CL) befindet, und eine äußere Schulterquerrille (66), die sich auf der Seite des Endes (TE) der Laufflächenoberfläche (6) befindet, umfasst, und
sich jede der inneren Schulterquerrille (64) und der äußeren Schulterquerrille (66) in der axialen Richtung erstreckt oder in Bezug auf die axiale Richtung geneigt ist.

10. Schwerlastreifen (2) nach Anspruch 9, wobei die Schulterquerrillen (62) flacher als die Kronenfeinschnitte (40) sind.

11. Schwerlastreifen (2) nach Anspruch 9 oder 10, wobei
jeder der Schulterlandabschnitte (22) eine schmale Schulterrille (68) aufweist, die sich kontinuierlich in der Umfangsrichtung erstreckt,
die schmale Schulterrille (68) flacher als die Kronenfeinschnitte (40) ist und
die schmale Schulterrille (68) die Schulterquerrillen (62) schneidet.

12. Schwerlastreifen (2) nach Anspruch 11, wobei
die innere Schulterquerrille (64) die schmale Schulterrille (68) und die Schulterumfangshauptrille (12) verbindet,
die äußere Schulterquerrille (66) das Ende (TE) der Laufflächenoberfläche (6) und die schmale Schulterrille (68) verbindet und
ein Neigungswinkel (θuy) der inneren Schulterquerrille (64) größer als ein Neigungswinkel (θsy) der äußeren Schulterquerrille (66) ist.

13. Schwerlastreifen (2) nach einem der Ansprüche 1 bis 12, wobei ein Verhältnis (HM/DGc) der Rillentiefe (HM) der schmalen Kronenrille (24) zu der Rillentiefe (DGc) der Kronenumfangshauptrille (14) nicht kleiner als 0,75 und nicht größer als 1,0 ist.

14. Schwerlastreifen (2) nach einem der Ansprüche 1 bis 13, wobei ein Verhältnis (DGp/HM) einer Rillentiefe (DGp) jedes Kronenfeinschnitts (40) zu der Rillentiefe (HM) der schmalen Kronenrille (24) nicht kleiner als 0,30 und nicht größer als 0,85 ist.

## Revendications

1. Pneumatique pour service intensif (2) comprenant une bande de roulement (4) ayant une surface de bande de roulement (6) configurée pour venir en contact avec une surface routière, dans lequel
la bande de roulement (4) a une pluralité de rainures principales circonférentielles (10) alignées dans une direction axiale et s'étendant en continu dans une direction circonférentielle,
la pluralité de rainures principales circonférentielles (10) incluent une rainure principale circonférentielle de couronne (14) située sur un plan d'équateur (CL) et une paire de rainures principales circonférentielles d'épaulement (12) situées chacune sur un côté le plus à l'extérieur dans la direction axiale,
la pluralité de rainures principales circonférentielles (10) divisent la bande de roulement (4) en une pluralité de portions en relief (18),
la pluralité de portions en relief (18) incluent une paire de portions en relief de couronne (20) au plus proche du plan d'équateur (CL) et une paire de portions en relief d'épaulement (22) situées chacune axialement à l'extérieur de la rainure principale circonférentielle d'épaulement (12) et incluant une extrémité (TE) de la surface de bande de roulement (6),
chacune des portions en relief de couronne (20) a une rainure étroite de couronne (24) s'étendant en continu dans la direction circonférentielle,
la rainure étroite de couronne (24) divise la portion en relief de couronne (20) en deux portions en relief étroites de couronne (34),
chacune des portions en relief étroites de couronne (34) a une pluralité de fentes de couronne (40) traversant la portion en relief étroite de couronne (34) et moins profonde que la rainure principale circonférentielle de couronne (14),
la rainure étroite de couronne (24) est plus profonde que les fentes de couronne (40),
chaque rainure étroite de couronne (24) inclut un corps principal de portion formant corps (32) et une portion à largeur agrandie (28) située radialement à l'intérieur de la portion principale de portion formant corps (32) et ayant une largeur de rainure supérieure à une largeur de rainure du corps principal de portions formant corps (32),
chacune des rainures principales circonférentielles d'épaulement (12) a une surface de paroi intérieure (52) plus proche du plan d'équateur (CL), une surface de paroi extérieure (54) plus proche de l'extrémité (TE) de la surface de bande de roulement (6), et une surface de fond (12B) s'étendant entre la surface de paroi intérieure (52) et la surface de paroi extérieure (54) et incluant un fond de rainure (12T), et
un emplacement (LB) du fond de rainure (12T) dans chacune des rainures principales circonférentielles d'épaulement (12) inclut des pics intérieurs (LBu) plus proches du plan d'équateur (CL) et des pics extérieurs (LBs) plus proches de l'extrémité (TE) de la surface de bande de roulement (6), et s'étend en zigzag tout en passant à travers les pics intérieurs (LBu) et les pics extérieurs (LBs) en alternance dans la direction circonférentielle,
**caractérisé en ce que** chaque rainure étroite de couronne (24) inclut des rainures longitudinales intérieures (56) plus proches du plan d'équateur (CL), des rainures longitudinales extérieures (50) plus proches de l'extrémité (TE) de la surface de bande de roulement (6), et des rainures de connexion (60) connectant les rainures longitudinales intérieures (56) et les rainures longitudinales extérieures (58), et
les rainures longitudinales intérieures (56) et les rainures longitudinales extérieures (58) sont agencées en alternance dans la direction circonférentielle.

2. Pneumatique pour service intensif (2) selon la revendication 1, dans lequel la rainure principale circonférentielle de couronne (14) inclut des premiers pics (14a) plus proches d'une première extrémité (TE1) de la surface de bande de roulement (6) et des seconds pics (14b) plus proches d'une seconde extrémité (TE2) de la surface de bande de roulement (6), et s'étendt en zigzag tout en passant à travers les premiers pics (14a) et les seconds pics (14b) en alternance dans la direction circonférentielle.

3. Pneumatique pour service intensif (2) selon la revendication 1 ou 2, dans lequel une profondeur de rainure (HM) de la rainure étroite de couronne (24) est égale à une profondeur de rainure (DGc) de la rainure principale circonférentielle de couronne (14), ou la rainure étroite de couronne (24) est moins profonde que la rainure principale circonférentielle de couronne (14).

4. Pneumatique pour service intensif (2) selon l'une quelconque des revendications 1 à 3, dans lequel les fentes de couronne (40) s'étendent dans la direction axiale ou sont inclinées par rapport à la direction axiale.

5. Pneumatique pour service intensif (2) selon la revendication 4, dans lequel parmi les deux portions en relief étroites de couronne (34), la portion en relief étroite de couronne (34) plus proche du plan d'équateur (CL) est une portion en relief étroite de couronne intérieure (36), et la portion en relief étroite de couronne (34) plus proche de l'extrémité (TE) de la surface de bande de roulement (6) est une portion en relief étroite de couronne extérieure (38), et une direction d'inclinaison des fentes de couronne (40) sur la portion en relief étroite de couronne intérieure (36) est opposée à une direction d'inclinaison des fentes de couronne (40) sur la portion en relief étroite de couronne extérieure (38).

6. Pneumatique pour service intensif (2) selon l'une quelconque des revendications 1 à 3, dans lequel
les fentes de couronne (40) sont inclinées par rapport à la direction axiale, parmi les deux portions en relief étroites de couronne (34), la portion en relief étroite de couronne (34) plus proche du plan d'équateur (CL) est une portion en relief étroite de couronne intérieure (36), et la portion en relief étroite de couronne (34) plus proche de l'extrémité (TE) de la surface de bande de roulement (6) est une portion en relief étroite de couronne extérieure (38),
une direction d'inclinaison des fentes de couronne (40) sur la portion en relief étroite de couronne intérieure (36) est opposée à une direction d'inclinaison des fentes de couronne (40) sur la portion en relief étroite de couronne extérieure (38),
la rainure étroite de couronne (24) inclut des rainures longitudinales intérieures (56) plus proches du plan d'équateur (CL), des rainures longitudinales extérieures (58) plus proches de l'extrémité (TE) de la surface de bande de roulement (6), et des rainures de connexion (60) connectant les rainures longitudinales intérieures (56) et les rainures longitudinales extérieures (58),
les rainures longitudinales intérieures (56) et les rainures longitudinales extérieures (58) sont agencées en alternance dans la direction circonférentielle,
les fentes de couronne (40) sur la portion en relief étroite de couronne intérieure (36) connectent les seconds pics (14b) de la rainure principale circonférentielle de couronne (14) et les rainures longitudinales extérieures (58) de la rainure étroite de couronne (24), et
les fentes de couronne (40) sur la portion en relief étroite de couronne extérieure (38) connectent les rainures longitudinales intérieures de la rainure étroite de couronne (24) et la rainure principale circonférentielle d'épaulement (12).

7. Pneumatique pour service intensif (2) selon l'une quelconque des revendications 1 à 6, dans lequel
la surface de paroi intérieure (52) et la surface de paroi extérieure (54) de la rainure principale circonférentielle d'épaulement (12) sont inclinées par rapport à une ligne normale de la surface de bande de roulement (6) au niveau d'une ouverture de rainure (12M) de la rainure principale circonférentielle d'épaulement (12),
au niveau du pic intérieur (LBu) inclus dans l'emplacement (LB) du fond de rainure (12T) de la rainure principale circonférentielle d'épaulement (12), un angle d'inclinaison (θu) de la surface de paroi intérieure (52) est égal à un angle d'inclinaison (θs) de la surface de paroi extérieure (54), ou est supérieur à l'angle d'inclinaison (θs) de la surface de paroi extérieure (54), et
au niveau du pic extérieur (LBs) inclus dans l'emplacement (LB) du fond de rainure (12T) de la rainure principale circonférentielle d'épaulement (12), l'angle d'inclinaison (θu) de la surface de paroi intérieure (52) est supérieur à l'angle d'inclinaison (θs) de la surface de paroi extérieure (54).

8. Pneumatique pour service intensif (2) selon la revendication 7, dans lequel l'emplacement (LB) du fond de rainure (12T) de la rainure principale circonférentielle d'épaulement (12) est situé entre une ligne centrale (ML) d'une largeur de rainure (WGs) au niveau de l'ouverture de rainure (12M) de la rainure principale circonférentielle d'épaulement (12) et un bord (12E) sur le côté de l'extrémité (TE) de la surface de bande de roulement (6) parmi une paire de bords (12) formant l'ouverture de rainure (12M).

9. Pneumatique pour service intensif (2) selon l'une quelconque des revendications 1 à 8, dans lequel
chacune des portions en relief d'épaulement (22) a des portions latérales d'épaulement (62) qui traversent la portion en relief d'épaulement (22),
chacune des portions latérales d'épaulement (62) inclut une rainure latérale d'épaulement intérieure (64) située sur le côté du plan d'équateur (CL) et une rainure latérale d'épaulement extérieure (66) située sur le côté de l'extrémité (TE) de la surface de bande de roulement (6), et
chacune de la rainure latérale d'épaulement intérieure (64) et de la rainure latérale d'épaulement extérieure (66) s'étend dans la direction axiale ou est inclinée par rapport à la direction axiale.

10. Pneumatique pour service intensif (2) selon la revendication 9, dans lequel les rainures latérales d'épaulement (62) sont moins profondes que les fentes de couronne (40).

11. Pneumatique pour service intensif (2) selon la revendication 9 ou 10, dans lequel
chacune des portions en relief d'épaulement (22) a une rainure étroite d'épaulement (68) s'étendant en continu dans la direction circonférentielle,
la rainure étroite d'épaulement (68) est moins profonde que les fentes de couronne (40), et
la rainure étroite d'épaulement (68) recoupe les rainures latérales d'épaulement (62).

12. Pneumatique pour service intensif (2) selon la revendication 11, dans lequel
la rainure latérale d'épaulement intérieure (64) connecte la rainure étroite d'épaulement (68) et la rainure principale circonférentielle d'épaulement (12), la rainure latérale d'épaulement extérieure (66) connecte l'extrémité (TE) de la surface de bande de roulement (6) et la rainure étroite d'épaulement (68), et
un angle d'inclinaison (θuy) de la rainure latérale d'épaulement intérieure (64) est supérieur à un angle d'inclinaison (θsy) de la rainure latérale d'épaulement extérieure (66).

13. Pneumatique pour service intensif (2) selon l'une quelconque des revendications 1 à 12, dans lequel un rapport (HM/DGc) de la profondeur de rainure (HM) de la rainure étroite de couronne (24) sur la profondeur de rainure (DGc) de la rainure principale circonférentielle de couronne (14) n'est pas inférieur à 0,75 et n'est pas supérieur à 1,0.

14. Pneumatique pour service intensif (2) selon l'une quelconque des revendications 1 à 13, dans lequel un rapport (DGp/HM) d'une profondeur de rainure (DGp) de chaque fente de couronne (40) sur la profondeur de rainure (HM) de la rainure étroite de couronne (24) n'est pas inférieur à 0,30 et n'est pas supérieur à 0,85.
